# EUROPEAN PATENT APPLICATION

(11) **EP 4 814 955 A1**
(43) Date of publication of application: **30.09.2026**
(21) Application number: 26167263.8
(22) Date of filing: 24.03.2026
(51) Int. Cl.: G10L 21/0208, H04R 25/00, G10L 21/0232, G06N 3/044, G06N 3/045, G06N 3/08, G06N 3/082, G06N 3/084, G06N 3/09, H04R 1/10

(54) **A METHOD FOR TRAINING A NEURAL NETWORK**

(30) Priority: 27.03.2025 EP 25166628
(71) Applicant: Oticon A/S, 2765 Smørum (DK)
(72) Inventor: DE HAAN, Jan M., DK-2765 Smørum (DK); HOANG, Poul, DK-2765 Smørum (DK); GÄTKE, Michael Noes, DK-2765 Smørum (DK); KING, Alexander W., DK-2765 Smørum (DK); ORLINSKA, Katarzyna, DK-2765 Smørum (DK); GONZALEZ, Philippe, DK-2765 Smørum (DK)
(74) Representative: Demant

(57) **Abstract**

A method for training a neural network is disclosed. The method comprises receiving, by a sound database, a training input. The training input comprises a speech component and a noise component. The method comprises receiving, by the sound database, a training target comprising the speech component. The method comprises providing, by a high-resolution analysis filter bank, a high-resolution training sub-band input based on the training input. The method comprises determining, by the neural network comprising a plurality of neural network parameters, one or more sub-band filters based on the high-resolution training sub-band input. The method comprises providing, by a low-resolution analysis filter bank, a low-resolution training sub-band input based on the training input. The method comprises providing, by filtering the low-resolution training sub-band input using the one or more sub-band filters, a training sub-band output. The method comprises providing, by the low-resolution synthesis filter bank, a training output. The method comprises training the neural network by updating, by a network optimizer, the neural network parameters based on reducing a neural network loss between the training output and the training target.

## Description

### TECHNICAL FIELD

The present application relates to the field of noise reduction in hearing aids. Specifically, the present application generally relates to noise reduction for audio signals picked-up by microphones of a hearing aid. The application further relates to the field of time-frequency analysis of audio signals. The application further relates to the field of hearing aid signal processing. The application further relates to the field of machine learning and neural networks.

### BACKGROUND

Many noise reduction systems that utilize an analysis filter bank for processing a noisy audio input signal in the time-frequency domain have a performance limitation. For example, most conventional time-frequency domain single-channel noise reduction systems, such as the Wiener filter, use a real-valued gain for each frequency band in order to suppress the background noise. The use of real-valued gains to suppress the background noise has the limitation of not being able to properly attenuate noise in time-frequency bins that contain a desired signal, e.g. a speech signal. Another limitation is the frequency resolution of the analysis filter bank in real-time systems. Many real-time applications require low signal delay throughout the signal processing chain, thus limiting the frequency resolution of the analysis filter bank, as a higher frequency resolution analysis filter bank typically leads to higher signal delay. A higher frequency resolution of the analysis filter bank may enable better single-channel noise reduction when the desired signal comprises harmonic components. For example, speech signals comprise harmonic components, which implies that there may be frequency bins between speech harmonics where the speech signal is absent and thereby only contains noise. However, in order to effectively suppress the frequency bins between speech harmonics that only contain noise, the analysis filter bank may need to be of sufficiently high frequency resolution, which may be a problem for some real-time applications. On the other hand, although low frequency resolution often leads to lower signal delay, the noise reduction performance will degrade and co-modulation artifacts will typically arise from untreated noise between the harmonics of speech.

### SUMMARY

The present disclosure relates to the use of one or more sub-band filters in the frequency domain to attenuate background noise in a microphone signal. The disclosure relates to the use of two analysis filter banks. One of the two analysis filter banks has a low frequency resolution that outputs a set of low resolution sub-band input signals, and the other analysis filter bank has a higher frequency resolution that outputs a set of high resolution sub-band input signals. The low frequency resolution analysis filter bank has low signal delay but low frequency resolution, whereas the high frequency resolution analysis filter bank has high signal delay but high frequency resolution. The disclosure relates to using the output of the high frequency resolution analysis filter bank to estimate one or more sub-band filters that are applied to the set of low resolution sub-band input signals to attenuate background noise in the set of low-resolution sub-band signals. In certain examples, the one or more sub-band filters are estimated with a sub-band filter estimator which may be a neural network or another estimation algorithm.

### A hearing aid:

In an aspect of the present disclosure, a hearing aid comprises an input unit. The input unit is configured to pick-up sound. The input unit is configured to provide an electrical audio input signal representing the picked-up sound. The hearing aid comprises a first signal processing system. The first signal processing system comprises a low-resolution analysis filter bank. The low-resolution analysis filter bank is configured to provide *M_{LR}* numbers of first sub-band input signals based on the electrical audio input signal. The first signal processing system comprises one or more sub-band filters. The first signal processing system is configured to provide a plurality of processed sub-band signals based on filtering the first sub-band input signals using the one or more sub-band filters. The hearing aid comprises a second signal processing system. The second signal processing system comprises a high-resolution analysis filter bank. The high-resolution analysis filter bank is configured to provide *M_{HR}* numbers of second sub-band input signals based on the electrical audio input signal. *M_{HR}* is larger than *M_{LR}.* The second signal processing system comprising a sub-band filter estimator. The sub-band filter estimator is configured to determine a plurality of sub-band filter coefficients of the one or more sub-band filters of the first signal processing system based on the second sub-band input signals to reduce noise in the first sub-band input signals. The first signal processing system comprises a low-resolution synthesis filter bank being configured to provide a processed output signal based on the processed sub-band signals. The hearing aid comprises an output unit. The output unit comprising a loudspeaker configured to provide an audible processed sound based on the processed output signal.

The hearing aid comprises an input unit. The input unit is configured to pick-up sound. The input unit is configured to provide an electrical audio input signal. The electrical audio input signal represents the picked-up sound.

The input unit may comprise a microphone configured to pick-up sound. The electrical audio input signal may be based on the picked-up sound by the microphone. The input unit may comprise a plurality of microphones each configured to pick-up sound. The picked-up sound may comprise a speech sound generated by a human speaker. The speech sound may be a desired sound for a user of the hearing aid. The picked-up sound may comprise a noise sound generated by a noise source or a superposition of several noise sources. The noise sound may be an undesired sound for a user of the hearing aid.

The hearing aid comprises a first signal processing system. The signal processing system comprises a low-resolution analysis filter bank. The low-resolution analysis filter bank is configured to provide *M_{LR}* numbers of first sub-band input signals based on the electrical audio input signal. In other words, the low-resolution analysis filter bank can be configured to receive (e.g., obtain) the electrical audio input signal.

The first signal processing system may constitute a digital signal processor which may be a computer processor of the hearing aid. The first signal processing system may be a signal processing system that is of the digital signal processor. The first signal processing system may be configured to carry out numerical computations.

The low-resolution analysis filter bank may be an algorithm for transforming a segment of a time domain signal, such as a segment of the electrical audio input signal, into the time-frequency domain, so that the output of low-resolution analysis filter bank is a time-frequency domain signal of low frequency resolution. The transformation may be based on the discrete Fourier transform. Transforming a segment of a time domain signal into the time-frequency domain may be based on the short-time Fourier transform. The short-time Fourier transform is based on segmentation of the time domain signal into segments of *M_{LR}* samples and a discrete Fourier transform. The low-resolution analysis filter bank is configured to provide *M_{LR}* number of first sub-band input signals based on the electrical audio input signal. Each first sub-band input signal may be a sinusoidal representation of the segmented electrical audio input signal at a particular frequency. The first sub-band input signal may be represented as *X_{low}*(*k, l*) where *k* is the frequency band index, and *l* is the time segmentation index.

The first signal processing system comprises one or more sub-band filters. The first signal processing system is configured to provide a plurality of processed sub-band signals based on filtering the first sub-band input signals using the one or more sub-band filters.

A sub-band filter may be a filter applied to a sub-band signal such as the first sub-band input signal. The sub-band filter may comprise a plurality of sub-band filter coefficients denoted as *F_{LR,q}*(*k, l*), where *F_{LR,q}*(*k, l*) is the *q*'th sub-band filter coefficient at frequency bin *k,* and *l* is the time segmentation index (i.e., frame index). Each sub-band filter coefficient may be a complex value. The sub-band filter may comprise *L_{LR}* number of sub-band filter coefficients. The *L_{LR}* number of sub-band filter coefficients may be pre-selected by a hearing aid developer.

The first signal processing system may be configured to compute the processed sub-band signals *Y*(*k*, *l*) as: $Y \left(k, l\right) = {\sum }_{q = 0}^{{L}_{LR} - 1} {F}_{LR , q}^{*} \left(k, l\right) {X}_{low} \left(k,l-q\right) ,$ where the processed sub-band signals *Y*(*k, l*) are computed as a filtering of the first sub-band input signals *X_{low}*(*k, l*), the *L_{LR}* is the sub-band filter length, and where the superscript _{*} represents the complex conjugate.

The hearing aid comprises a second signal processing system. The second signal processing system comprises a high-resolution analysis filter bank. The high-resolution analysis filter bank is configured to provide *M_{HR}* numbers of second sub-band input signals based on the electrical audio input signal.

The second signal processing system may constitute the digital signal processor. The second signal processing system may be a signal processing system that is part of the digital signal processor. The second signal processing system may be configured to carry out numerical computations.

The high-resolution analysis filter bank may be an algorithm for transforming a second segment of a time domain signal, such as the electrical audio input signal, into the time-frequency domain, so that the output of high-resolution analysis filter bank is a second time-frequency domain signal of high frequency resolution. The transformation may be based on the discrete Fourier transform. Transforming the second segment of a time domain signal into the time-frequency domain may be based on the short-time Fourier transform. The short-time Fourier transform is based on segmentation of the time domain signal into segments of *M_{HR}* samples and a discrete Fourier transform. The high-resolution analysis filter bank is configured to provide *M_{HR}* number of second sub-band input signals. Each second sub-band input signal may be a sinusoidal representation of the second segmented electrical audio input signal at a particular frequency. The second sub-band input signal may be represented as *X_{high}*(*k, l*) where *k* is the frequency band index, and *l* is the time segmentation index.

The high-resolution analysis filter bank and the low-resolution filter bank are configured so that *M_{HR}* is larger than *M_{LR}.* In other words, the *M_{HR}* number of second sub-band input signals is larger than the *M_{LR}* number of first sub-band input signals.

The second signal processing system comprises a sub-band filter estimator. The sub-band filter estimator is configured to determine the one or more sub-band filters. Determining the one or more sub-band filters may involve determining coefficients of the one or more sub-band filters. The sub-band filter estimator may be an algorithm configured to determine the one or more sub-band filters by estimating coefficients of the one or more sub-band filters. The sub-band filter estimator is configured to determine the one or more sub-band filters of the first signal processing system based on the second sub-band input signals to reduce noise or ambient noise (background noise) in the first sub-band input signals.

The low-resolution analysis filter bank may be configured such that the number of first sub-band input signals is, for example, *M_{LR}* = 32, *M_{LR}* = 64, *M_{LR}* = 128, *M_{LR}* = 256, *M_{LR}* = 512 or any integer number lower than the number of second sub-band input signals. The selection of the number of first sub-band input signals may be dependent on the sampling frequency of the input unit or the first signal processing system. For example, the selection may be based on a desired maximum latency of the first signal processing system. A desired maximum signal delay (latency) may, for example, be in the range 0 ms to 20 ms. The desired maximum signal delay may, for example, be 2 ms, 5 ms, 8 ms, 10 ms, 20 ms, etc. The signal delay may relate to the time it takes before the hearing aid is able to provide the output signal based on the electrical audio input signal.

The high-resolution analysis filter bank may be configured such that the number of second sub-band input signals is, for example, *M_{HR}* = 128, *M_{HR}* = 256, *M_{HR}* = 512, *M_{HR}* = 1024, *M_{HR}* = 2048 or any integer number higher than the number of first sub-band input signals. The selection of the number of second sub-band input signals may be dependent on the the selected number of first sub-band input signals. For example, the number of second sub-band input signals may be selected to be a factor of 2 or a factor of 4 more sub-bands than the number of first sub-band input signals. In other examples, the factor may be any number above 1 including non-integers. The factor may be chosen to be a non-integer number as long as *M_{HR}* is an integer number.

The first signal processing system comprises a low-resolution synthesis filter bank. The low-resolution synthesis filter bank is configured to provide a processed output signal based on the processed sub-band signals.

The low-resolution synthesis filter bank may be an algorithm for transforming a time-frequency domain signal, such as the processed sub-band signals, into the time domain. The processed output signal may be the time domain signal. The processed output signal may be a time segment of the processed output signal. The transformation may be based on the inverse discrete Fourier transform. Transforming time-frequency domain signals, such as the processed sub-band signals, into the time domain may be based on the inverse short-time Fourier transform. The inverse short-time Fourier transform is based on receiving the processed sub-band signals of *M_{LR}* number of frequency bands and applying the inverse discrete Fourier transform. The low-resolution synthesis filter bank is configured to provide M number of samples of the signals. Each first sub-band input signal may be a sinusoidal representation of the segmented electrical audio input signal at a particular frequency. The first sub-band input signal may be represented as *X_{low}*(*k, l*) where *k* is the frequency band index, and *l* is the time segmentation index.

The hearing aid comprises an output unit. The output unit comprises a loudspeaker. The loudspeaker is configured to provide an audible processed sound based on the processed output signal. The audible processed sound may be heard by the hearing aid user of the hearing aid.

Typically, it is advantageous that a hearing aid has as low signal delay (latency) as possible. The signal delay is the time from which the sound is picked-up by the microphones to the time the audible processed sound is produced by the loudspeaker. Contributing factors to signal delay are the analysis filter bank and synthesis filter banks of most audio processing systems (e.g., signal processing systems) including those in hearing aids, where the analysis filter bank is configured to transform a time domain signal into a time-frequency domain signal (or frequency domain signal) with a finite frequency resolution, and the synthesis filter bank is configured to transform the time-frequency domain signal, or a processed version thereof, back to the time domain. The frequency resolution of the time-frequency domain signal may be determined by the discrete Fourier transform (DFT) size of the filter banks. The DFT size, prototype filters, and the downsampling factor of the analysis filter bank and the synthesis filter bank are typically kept fixed. However, the trade-off in the design of analysis filter banks and synthesis filter banks with low signal delay is often that the frequency resolution of the time-frequency domain signal is poor, i.e., not sufficiently good enough to attenuate noise between speech harmonics. On the other hand, designing analysis filter banks and synthesis filter banks with high frequency resolution often results in high signal delay which is undesirable for the hearing aid user as this may lead to poorer sound quality.

Embodiments in the present disclosure relate to two signal processing systems. The two signal processing systems can be incorporated into a hearing aid.

The first signal processing system comprises a low-resolution analysis filter bank and a low-resolution filter bank. The low-resolution analysis filter bank and low-resolution filter bank ensure a low signal delay, but consequently also has low frequency resolution of the first sub-band input signals. For real-valued gains used for noise attenuation on the first sub-band input signals (e.g., the output of the low-resolution analysis filter bank) it may be very hard (if not impossible) to attenuate noise between speech harmonics. Instead of relying on real-valued gains applied to the first sub-band input signals, the disclosure can allow for using one or more sub-band filters applied to the first sub-band input signals instead as shown in equation (1).

To determine the one or more sub-band filters, the present disclosure includes a second signal processing system configured to determine the one or more sub-band filters, e.g., the sub-band filter coefficients. The second signal processing system may not be required to have a low signal delay (latency) as its main purpose is to determine the one or more sub-band filters. Therefore, the second signal processing system can comprise a high-resolution analysis filter bank configured to provide a plurality of second sub-band input signals. The high-resolution analysis filter bank may have a higher DFT size compared to the low-resolution analysis filter bank, and may provide more sub-band signals than the low-resolution analysis filter bank. The second signal processing system can comprise a sub-band filter estimator. The sub-band filter estimator can receive the second sub-band input signals and determines the one or more sub-band filters of the first signal processing system based on the second sub-band input signals.

Thereby, an advantage of embodiments of the disclosed hearing aid is that the first signal processing system is configured to provide a processed sub-band signal (e.g., the output of the one or more sub-band filters being applied on the first sub-band input signals) with low signal delay that is able to suppress noise between speech harmonics, and thereby provides an audible processed sound with improved sound quality. Thereby, the noise reduction system of the first signal processing system has the potential to achieve the noise reduction performance of the the high-resolution signal processing system but with low signal delay with the use of one or more sub-band filters.

In an example embodiment, the input unit comprises a plurality of microphones each configured to pick-up sound. The input unit is configured to provide a plurality of electrical audio input signals. The low-resolution analysis filter bank of the first signal processing system is configured to provide a plurality of sub-band input signals for each electrical audio input signal.

The signal processing system can include a beamformer configured to provide a beamformed signal based on the sub-band input signals for each frequency band. The first signal processing system is configured to provide a plurality of processed sub-band signals by applying the sub-band filter on the beamformed signals.

The sub-band estimator may comprise a voice activity detector. The second signal processing system may comprise the voice activity detector. The voice activity detector may be configured to detect the presence of speech based on the electrical audio input signal. The sub-band estimator is configured to determine the one or more sub-band filters if speech is detected.

Determining the one or more sub-band filters may involve determining coefficients of the one or more sub-band filters. The first signal processing system may be configured to apply the one or more sub-band filters when speech is detected present (speech presence) based on the electrical audio input signal. The first signal processing system may be configured to apply low-resolution gains *g*(*k, l*) on the first sub-band input signal when speech is not detected present (speech absence) based on the electrical audio input signal. The low-resolution gains may be real-valued scalar values between a value of 0 and 1, where a value of 0 results in maximum attenuation of a sub-band signal at a particular sub-band, and a value of 1 results in no attenuation of a sub-band signal at a particular sub-band.

The first signal processing system may be configured to set the sub-band filter lengths to 1 when speech is not detected present (speech absence) based on the electrical audio input signal. A sub-band filter length of l corresponds to a noise reduction gain. The low-resolution gains may be applied on the first sub-band input signal when speech is not detected. Applying the low-resolution gains on the first sub-band input signal may be expressed as: $Y \left(k, l\right) = g \left(k, l\right) ⋅ {X}_{low} \left(k, l\right) , if speech absence at l .$

The low-resolution gains may be determined by a low-resolution noise reduction system constituting the first signal processing system. The low-resolution gains may be determined based on a signal-to-noise ratio determined by the first signal processing system.

Thereby, an advantage of the disclosure is improved computational efficiency during speech absence. If speech is not detected present, there is no need for a noise reduction system to attenuate noise between speech harmonics and a low-resolution noise reduction system in the first signal processing system is therefore sufficient.

The first sub-band input signals may comprise a lower frequency portion. The first sub-band input signals may comprise a higher frequency portion. The boundary between a lower frequency portion and a higher frequency portion can be known as a frequency boundary value. Values above the frequency boundary value are considered high frequency portions. Values at or below the frequency boundary are considered low frequency portions. The frequency boundary value may be a predetermined value such as 500 Hz, 1 kHz, 2 kHz, 4 kHz, or any value in a range between 300 Hz and 4 kHz. The frequency boundary value may be set so that the lower frequency portion contains most of the energy of speech. The frequency boundary value may be set so that the lower frequency portion contains the portion of speech where speech harmonics are most likely to appear.

The first signal processing system may be configured to apply the one or more sub-band filters on the lower frequency portion. The first signal processing system may be configured to apply the one or more sub-band filters on the higher frequency portion. The first signal processing system may be configured to apply the low-resolution noise reduction gains on the higher frequency portion. The first signal processing system may be configured to apply the low-resolution noise reduction gains on the low frequency portion. In an embodiment, the first signal processing system is configured to apply the one or more sub-band filters on the lower frequency portion and apply the low-resolution noise reduction gains on the higher frequency portion.

Thereby, an advantage of the disclosure is that only a portion of the first sub-band input signals are processed making the hearing aid computationally efficient. The portion of the first sub-band input signals is selected based on characteristics of speech. For example, the characteristic of speech may be that most the energy of speech is located below 2 kHz or that most speech harmonics are located below 2 kHz.

The first signal processing system may comprise a second voice activity detector. The second voice activity detector may be configured to detect the presence of speech based on the electrical audio input signal or low-resolution sub-band input signal. The second voice activity detector may be configured to control a filtering mode of operation of the first signal processing system. The filtering mode of operation comprises a first filtering mode and a second filtering mode. The second voice activity detector may control the first signal processing system to operate in the first filtering mode if speech is detected.

In the first filtering mode, the first signal processing system may be configured to apply the one or more sub-band filters to the lower frequency portion and apply the low-resolution noise reduction gains to the higher frequency portion. The second voice activity detector may control the first signal processing system to operate in the second filtering mode if speech is not detected. In the second filtering mode, the first signal processing system may be configured to apply the low-resolution noise reduction gains to the lower and higher frequency portions.

The sub-band filter estimator may comprise a neural network. The neural network may be configured to determine the one or more sub-band filters based on the second sub-band input signals. The neural network may be configured to determine the one or more sub-band filters based on the electrical audio input signal.

The neural network may comprise a convolutional layer. The convolutional layer may comprise at least one kernel. A kernel may comprise a plurality of kernel coefficients. The convolutional layer may be configured to receive the second sub-band input signals. The convolutional layer may be configured to receive a processed version of the second sub-band input signals. The neural network may be configured to convolve the second sub-band input signals across time and frequency with the at least one kernel. The convolutional layer may be configured to perform a dilated convolution with a dilation factor. The dilation factor may be indicative of the amount of skipping in time and/or frequency of the second sub-band input signal when performing the convolution. The convolutional layer may be configured to provide at least one convolved signal. The convolutional layer may be configured to provide a convolved signal for each kernel. The one or more sub-band filters may be determined based on the at least one convolved signal.

The second signal processing system may comprise a high-resolution noise reduction system. The high-resolution noise reduction system may be configured to reduce noise or ambient noise in the second sub-band input signals by applying a plurality of high-resolution noise reduction gains on the second sub-band input signals.

The sub-band filter estimator may be configured to determine the one or more sub-band filters based on the plurality of high-resolution noise reduction gains.

Thereby, an advantage of the present disclosure is that the one or more sub-band filters can be configured to mimic the behavior and performance of the high-resolution noise reduction system.

The high-resolution noise reduction gains can be determined based on signal-to-noise ratios of the second sub-band input signals. The second signal processing system may comprise a high-resolution sub-band voice activity detector. The high-resolution sub-band voice activity detector may be configured to detect the presence or absence of speech for each frequency band of the second sub-band input signal. The second signal processing system may comprise a high-resolution noise estimator configured to estimate a noise level for each frequency band of the background noise if speech is detected as absent in the corresponding frequency band of the second sub-band input signal. The estimated noise level may be used to determine an *a posteriori* signal-to-noise ratio or an *a priori* signal-to-noise ratio. The *a posteriori* signal-to-noise ratio or the *a priori* signal-to-noise ratio may be used to determine the high-resolution noise reduction gains. For example, the high-resolution noise reduction gains may be determined according to a Wiener filter (Wiener gain) or a minimum mean-square error log-amplitude estimator.

The second signal processing system may be configured to reduce noise or ambient noise in the second sub-band input signals by applying the high-resolution noise reduction gains to the second sub-band input signals. The second signal processing system may be configured to provide a plurality of second processed sub-band signals by applying the high-resolution noise reduction gains to the second sub-band input signals. The second signal processing system may comprise a high-resolution synthesis filter bank. The high-resolution synthesis filter bank may be configured to provide a second processed output signal based on the second processed sub-band signals.

The sub-band filter estimator may comprise a system analyzer. The system analyzer may be configured to determine a first system response of the first signal processing system. The system analyzer may be an algorithm configured to determine the z transform of the first signal processing system and the second signal processing system. The system analyzer may be configured to determine a second system response of the second signal processing system. The one or more sub-band filters may be determined based on the first and second system responses.

In an embodiment, the high-resolution synthesis filter bank is used for the system analyzer.

The sub-band filter estimator may comprise a linear transformation configured to linearly transform the high-resolution noise reduction gains into the one or more sub-band filters. The linear transform may be based on a matrix-vector multiplication. A matrix-vector multiplication may be defined as multiplication between a matrix and a vector which provides an output vector. Each element of the vector may be a linear combination of a row vector of the matrix and the vector being multiplied.

The sub-band filter estimator may comprise a non-linear transformation.

Determining the one or more sub-band filters may be based on reducing a system loss between the first system response and the second system response. A system loss may be based on a loss function (i.e. cost function) quantifying a numerical difference or similarity between the first system response and the second system response.

The system loss may comprise a frequency weighting. The frequency weighting may be a frequency dependent value multiplied on the system loss, so that particular frequency bands can be assigned a higher importance in determining the linear or non-linear transformation.

The system loss may comprise an L-norm error function. The L-norm error function may comprise computing the error between the first and second system responses. The L-norm error function may be the L-norm of the computed error.

The sub-band filter estimator may comprise a phase modifier configured to reduce the phase-shift of the one or more sub-band filters. The phase modifier may for example be based on the minimum phase method to modify the one or more sub-band filters to reduce the phase-shift. However, in general a method for modifying the phase or group delay of the one or more sub-band filters may be used to reduce the signal delay of the first signal processing system. Thereby, the signal delay of the first signal processing system can be further reduced with the phase modifier for improving the sound quality of the output signal.

The first signal processing system may comprise a downsampler configured to reduce the number of sub-band filter coefficients of the one or more sub-band filters.

The second signal processing system may comprise the downsampler configured to reduce the number of sub-band filter coefficients of the one or more sub-band filters.

### Signal model and noise reduction:

The signal model serves to clarify the notation and the objective of the disclosure. The signal model is one example embodiment that can be incorporated into the disclosure.

The electrical audio input signal typically comprises a target signal, e.g., a speech signal, and a noise signal, e.g., background noise. The speech signal is denoted as *s*(*n*) where *n* denotes the discrete time index. The noise signal is denoted as *v*(*n*). Background noise may be any disturbing sound originating from the environment that is not of interest to the hearing aid user. Background noise may also include self-noise of the microphone(s), e.g., noise that originates from the electronics rather than the environment. The speech signal and noise signal are not available separately by the microphone but only as a mixture of the speech signal and the noise signal. That means that the electrical audio input signal represents the mixture. Therefore, the electrical audio input signal may be represented as: $x \left(n\right) = s \left(n\right) + v \left(n\right) .$

Generally, the goal is to extract *s*(*n*) from the electrical audio input signal *x*(*n*)*,* which can be achieved by removing or attenuating the noise component *v*(*n*) by a noise reduction system. Most noise reduction systems are implemented in the time-frequency domain, and therefore the electrical audio input signal is processed by an analysis filter bank which is configured to provide a plurality of sub-band input signals denoted as *X*(*k, l*) where *k* refers to the frequency band and *l* refers to the time segmentation index. In the time-frequency domain, the sub-band input signals *X*(*k, l*) becomes: $X \left(k, l\right) = S \left(k, l\right) + V \left(k, l\right) .$

In the present disclosure, the hearing aid comprises a first signal processing system comprising a low-resolution analysis filter bank and a second signal processing system comprising a high-resolution analysis filter bank. The low-resolution analysis filter bank is configured to provide a plurality of first sub-band input signals based on the electrical audio input signal such that: ${X}_{LR} \left(k, l\right) = {S}_{LR} \left(k, l\right) + {V}_{LR} \left(k, l\right) , for k = 1 , … , {M}_{LR} ,$ where *M_{LR}* is the number of frequency bands of the low-resolution analysis filter bank (i.e., the number of first sub-band input signals). The high-resolution analysis filter bank is configured to provide a plurality of second sub-band input signals based on the electrical audio input signal such that: ${X}_{HR} \left(k, l\right) = {S}_{HR} \left(k, l\right) + {V}_{HR} \left(k, l\right) , for k = 1 , … , {M}_{HR} ,$ where *M_{HR}* is the number of frequency bands of the high-resolution analysis filter bank (i.e., the number of second sub-band input signals). The objective is to extract *S_{LR}*(*k, l*) based on *X_{LR}*(*k, l*) and *X_{HR}*(*k, l*). Conventionally, a noise reduction system in the first signal processing system applies a real-valued gain with a value between '0' and '1' on each low-resolution sub-band input signal. In frequency bands where speech is dominant, the real-valued gain is approximately a value of '1', whereas in frequency bands where noise is dominant, the real-valued gain is approximately a value of '0'. Thereby, the overall signal-to-noise ratio across frequency bands is improved and speech quality is thereby also improved. The processed sub-band signal is then transformed back into the time domain using a synthesis filter bank configured to provide the processed output signal *y*(*n*) based on the processed sub-band signal.

To determine the real-valued gain, the noise level or signal-to-noise ratio is typically estimated. The signal-to-noise ratio can be estimated based on an estimated noise level. The noise level may be estimated based on the noise level estimated during speech absence in the electrical audio input signal or the sub-band input signals. The output of a voice activity detector may be used to detect speech absence. When speech is detected absent, the noise level may be estimated based on the sub-band input signals. The real-valued gain can be determined based on the estimated noise level. The signal-to-noise ratio can be determined based on the estimated noise level. The signal-to-noise ratio may be determined based on computing a *a posteriori* signal-to-noise ratio, which is defined as the ratio between the sub-band input signal level (e.g., the power) and estimated noise level, i.e., $γ \left(k, l\right) = \frac{{P}_{x} \left(k, l\right)}{{P}_{v} \left(k, l\right)} ,$ where *Pₓ*(*k, l*) is the (estimated) sub-band input signal level at frequency band *k* and time segmentation index *l, Pᵥ*(*k, l*) is the (estimated) noise level at frequency band *k* and time segmentation index *l,* and *γ*(*k, l*) is the (estimated) *a posteriori* signal-to-noise ratio at frequency band *k* and time segmentation index *l.* In some embodiments, *Pₓ*(*k, l*) is instantaneously estimated, i.e., estimated based on a single-observation of the sub-band input signals and *Pᵥ*(*k, l*) is estimated over several observations over time (e.g., 200 ms or 500 ms) of the sub-band input signals when speech is detected absent.

The *a priori* signal-to-noise ratio may then be determined based on the *a posteriori* signal-to-noise ratio, where the *a priori* signal-to-noise ratio is defined as the ratio between the level of the target signal (e.g., a speech signal) and the estimated noise level. The level of the target signal may be determined based on a subtraction between the level of the sub-band input signal and the estimated noise level. However, it may also be estimated as the *a posteriori* signal-to-noise ratio minus a value of '1'. Hence, the *a priori* signal-to-noise ratio may be estimated as $ξ \left(k, l\right) = \frac{{P}_{x} \left(k, l\right)}{{P}_{v} \left(k, l\right)} - 1 = \frac{{P}_{x} \left(k, l\right) - {P}_{v} \left(k, l\right)}{{P}_{v} \left(k, l\right)} ,$ where *ξ*(*k, l*) is the (estimated) *a priori* signal-to-noise ratio at frequency band *k* and time segmentation index *l.* Typically, this leads to an estimated *a priori* signal-to-noise ratio with a high estimation variance, and therefore it is common to apply some (temporal) smoothing on the estimated *a priori* signal-to-noise ratio to lower the estimation variance. For example, the decision directed approach may be used to smoothen the estimated *a priori* signal-to-noise ratio. The estimated *a priori* signal-to-noise ratio may then be used to compute the real-valued gain. For example, the real-valued gain may be determined based on the Wiener filter which is the ratio between the estimated *a priori* signal-to-noise ratio and the estimated *a priori* signal-to-noise ratio plus one, i.e., $g \left(k, l\right) = \frac{ξ \left(k, l\right)}{ξ \left(k, l\right) + 1} .$

In a particular embodiment, the real-valued gains are computed based on the second sub-band input signals, so that high-resolution real-valued gains are obtained. The high-resolution real-valued gains are then used to determine the one or more sub-band filters.

In an embodiment, the second signal processing system comprises a voice activity detector. The voice activity detector is configured to determine the absence of speech for each second sub-band input signal. The second signal processing system comprises a noise estimator configured to determine the noise level for each second sub-band input signal based on the second sub-band input signal when speech is absent. The second signal processing system comprises a signal-to-noise ratio estimator. The signal-to-noise ratio estimator comprises determining the signal-to-noise ratio for each second sub-band input signal when speech is detected absent. The second signal processing system is configured to determine a high-resolution real-valued gain for each second sub-band input signal. The second signal processing system comprises a sub-band filter estimator configured to determine the one or more sub-band filters based on the high-resolution real-valued gains.

In an embodiment, the first signal processing system is configured to apply the one or more sub-band filters to a lower frequency portion of the first sub-band input signal and apply low-resolution noise reduction gains to a higher frequency portion of the first sub-band input signal. The low-resolution noise reduction gains may be determined similarly to the first signal processing system configured to determine the high-resolution noise reduction gains.

The sub-band filter estimator may comprise a neural network trained to determine the one or more sub-band filters based on the second sub-band input signal or the high-resolution real valued gains.

The sub-band filter estimator may comprise a linear transformation configured to determine the one or more sub-band filters based on the high-resolution real valued gains.

### A system analyzer:

In some embodiments, the sub-band filter estimator comprises a linear transformation. To determine the linear transformation, a system analyzer may be used to determine the system response of the first and second signal processing systems.

A first system response may comprise determining the system response of the low-resolution analysis filter bank, the one or more sub-band filters, and the low-resolution synthesis filter bank.

A second system response may comprise determining the system response of the high-resolution analysis filter bank, the high-resolution noise reduction gains, and the high-resolution synthesis filter bank.

### Determining a first system response of the first signal processing system:

The first system response can be the system response of the low-resolution analysis filter bank, the one or more sub-band filters, and the low-resolution synthesis filter bank. To determine the first system response, the following section describes the low-resolution analysis filter bank, the one or more sub-band filters, and the low-resolution synthesis filter bank.

The low-resolution analysis filter bank may comprise a plurality of low-resolution analysis filters *h_{LR,k}*(*n*). Each low-resolution analysis filter may comprise a low-resolution analysis prototype filter *h_{LR}*(*n*) (e.g., a window function) and a low-resolution frequency modulator *FM_{LR}*(*k*, *n*)*.* Typically, the low-resolution analysis prototype filter is identical for each low-resolution analysis filter of the low-resolution analysis filter bank. The low-resolution frequency modulator *FM_{LR}*(*k*, *n*) may comprise a sinusoidal function such as a cosine, and/or a sine, and/or a complex exponential function. The low-resolution analysis filters of the low-resolution analysis filter bank may be given as: ${h}_{LR , k} \left(n\right) = {h}_{LR} \left(n\right) {FM}_{LR} \left(k, n\right) .$

In a particular embodiment, the low-resolution analysis filters of the low-resolution analysis filter bank comprises the complex exponential function, such that the low-resolution analysis filters of the low-resolution analysis filter bank is given as: ${h}_{LR , k} \left(n\right) = {h}_{LR} \left(n\right) exp \left(\frac{j 2 π \left(n-{τ}_{LR , h}\right) k}{{M}_{LR}}\right) ,$ where *τ_{LR,h}* is the delay of the low-resolution analysis filters, *M_{LR}* is the number of frequency bands of the first signal processing system, and $\sqrt{- 1} = j$*.*

The low-resolution synthesis filter bank may comprise a plurality of low-resolution synthesis filters *b_{LR,k}*(*n*). Each synthesis filter may comprise a synthesis prototype filter *b_{LR}*(*n*) (e.g., a window function) and a low-resolution frequency modulator *FM_{LR}*(*k*, *n*). The synthesis prototype filter may be identical for each low-resolution synthesis filter across frequency bands of the low-resolution synthesis filter bank. The low-resolution frequency modulator *FM_{LR}*(*k, n*) may comprise a sinusoidal function such as a cosine, and/or a sine, and/or a complex exponential function. The low-resolution synthesis filters of the low-resolution synthesis filter bank may be given as: ${b}_{LR , k} \left(n\right) = {b}_{LR} \left(n\right) {FM}_{LR} \left(k, n\right) .$

In a particular embodiment, the low-resolution synthesis filters of the low-resolution synthesis filter bank comprise the complex exponential function, such that the low-resolution synthesis filters of the low-resolution synthesis filter bank are given as: ${b}_{LR , k} \left(n\right) = {b}_{LR} \left(n\right) exp \left(\frac{j 2 π \left(n-{τ}_{LR , b}\right) k}{{M}_{LR}}\right) ,$ where *τ_{LR,b}* is the delay of the low-resolution synthesis filters, *M_{LR}* is the number of frequency bands of the first signal processing system, and $\sqrt{- 1} = j$*.*

In a particular embodiment, the length of the low-resolution analysis prototype filter is an odd length of *L_{LR,h}* and the length of the low-resolution synthesis prototype filter is an odd length of *L_{LR,b}.*

The system response of the low-resolution analysis filter bank and the low-resolution synthesis filter bank may be described in the z-domain by the z-transform notation as: ${Y}_{LR} \left(z\right) = \frac{1}{{D}_{LR}} {\sum }_{k = 0}^{{M}_{LR} - 1} {\sum }_{d = 0}^{{D}_{LR} - 1} X \left({zW}_{{D}_{LR}}^{d}\right) {H}_{LR , k} \left({zW}_{{D}_{LR}}^{d}\right) {B}_{LR , k} \left(z\right) ,$ where ${W}_{{D}_{LR}}^{d} = exp \left(-j2πd/{D}_{LR}\right)$, and *D_{LR}* is a downsampling factor of the low-resolution analysis filter bank, and *H_{LR,k}*(·), *B_{LR,k}*(·), *X*(·), and *Y_{LR}*(·) are the low-resolution analysis prototype filters, the low-resolution synthesis prototype filters, and the processed output signal in the z-domain, respectively. Equation (14) may also be represented alternatively as: ${Y}_{LR} \left(z\right) = T {′}_{LR} \left(z\right) X \left(z\right) + {\sum }_{d = 1}^{{D}_{LR} - 1} {A}_{LR , d} \left(z\right) X \left({zW}_{{D}_{LR}}^{d}\right) ,$ where *T'_{LR}*(*z*) is the low-resolution total system response of the low-resolution analysis filter bank and the low-resolution synthesis filter bank without the sub-band-filters, and *A_{LR,d}*(*z*) represents the aliasing response of the low-resolution analysis filter bank and the low-resolution synthesis filter bank. The low-resolution system response of the low-resolution analysis filter bank and the low-resolution synthesis filter bank may be divided into a desired term comprising the low-resolution total system response *T'_{LR}*(*z*)*X*(*z*) without the one or more sub-band filters and an undesired term comprising the aliasing response ${\sum }_{d = 1}^{{D}_{LR} - 1} {A}_{LR , d} \left(z\right) X \left({zW}_{{D}_{LR}}^{d}\right)$. The low-resolution total system response without the one or more sub-band filters may be expressed as $T {′}_{LR} \left(z\right) = \frac{1}{{D}_{LR}} {\sum }_{k = 0}^{{M}_{LR} - 1} {H}_{LR , k} \left(z\right) {B}_{LR , k} \left(z\right) .$

The time domain equivalent may be expressed as: $t {′}_{LR} \left(n\right) = \frac{1}{{D}_{LR}} {\sum }_{k = 0}^{{M}_{LR} - 1} {h}_{LR , k} \left(z\right) ∗ {b}_{LR , k} \left(z\right) ,$ where * denotes the convolution. The aliasing term *A_{LR,d}*(*z*) maybe expressed as ${A}_{LR , d} \left(z\right) = \frac{1}{{D}_{LR}} {\sum }_{m = 0}^{{M}_{LR} - 1} {H}_{LR , k} \left({zW}_{{D}_{LR}}^{d}\right) {B}_{LR , k} \left(z\right) .$

The time domain equivalent of the low-resolution aliasing term may be expressed as: ${a}_{d} \left(n\right) = \frac{1}{{D}_{LR}} {\sum }_{k = 0}^{{M}_{LR} - 1} {h}_{LR , k} \left(n\right) exp \left(\frac{j 2 πd}{{D}_{LR}}\right) ∗ {b}_{LR , k} \left(z\right) .$

The one or more sub-band filters are now introduced into the expression by specifically including the one or more sub-band filters *F_{LR,k}*(*z^{D_{LR}}*) in the expression of the low-resolution total system response so that the first system response in the z-domain is given as ${T}_{LR} \left(z\right) = \frac{1}{{D}_{LR}} {\sum }_{k = 0}^{{M}_{LR} - 1} {H}_{LR , k} \left(z\right) {B}_{LR , k} \left(z\right) {F}_{LR , k} \left({z}^{{D}_{LR}}\right) .$

The expression may be simplified so that the terms corresponding to the system response of the low-resolution analysis filter bank and the low-resolution synthesis filter bank are collected in the expression *Q_{LR,k}*(*z*) = *H_{LR,k}*(*z*)*B_{LR,k}*(*z*), such that first system response may be ${T}_{LR} \left(z\right) = \frac{1}{{D}_{LR}} {\sum }_{k = 0}^{{M}_{LR} - 1} {Q}_{LR , k} \left(z\right) {F}_{LR , k} \left({z}^{{D}_{LR}}\right) .$

Likewise, the first system response can be represented in a time domain equivalent given as $\begin{matrix}{t}_{LR} \left(n\right) = {\sum }_{k = 0}^{{M}_{LR} - 1} {q}_{LR , k} \left(n\right) ∗ {\sum }_{l = 0}^{{L}_{LR , f} - 1} {f}_{LR , k} \left(l\right) δ \left(n-{lD}_{LR}\right) \\ = {\sum }_{l = 0}^{{L}_{LR , f} - 1} {\sum }_{k = 0}^{{M}_{LR} - 1} \left({q}_{LR , k}\left(n\right)∗δ\left(n-{lD}_{LR}\right)\right) {f}_{LR , k} \left(l\right) ,\end{matrix}$ where *L_{LR,f}* is the sub-band filter length (i.e., the number of sub-band filter coefficients of each sub-band filter), and *δ*(*n*) denotes the Kronecker delta function.

The expression *Q_{LR,k}*(*z*) = *H_{LR,k}*(*z*)*B_{LR,k}*(*z*) may only need to contain either the system response of the low-resolution analysis filter bank or the low-resolution synthesis filter bank, i.e., *Q_{LR,k}*(*z*) = *H_{LR,k}*(*z*) or *Q_{LR,k}*(*z*) = *B_{LR,k}*(*z*)*.* In a particular embodiment, the expression *Q_{LR,k}*(*z*) contains both *H_{LR,k}*(*z*) and *B_{LR,k}*(*z*).

### Determining a second system response of the second signal processing system:

The second system response can be the system response of the high-resolution analysis filter bank, the high-resolution noise reduction gain, and the high-resolution synthesis filter bank. To determine the second system response, the following section describes the high-resolution analysis filter bank, the high-resolution noise reduction gains, and the high-resolution synthesis filter bank.

The high-resolution analysis filter bank may comprise a plurality of high-resolution analysis filters *h_{HR,k}*(*n*). Each high-resolution analysis filter may comprise a high-resolution analysis prototype filter *h_{HR}*(*n*) (e.g., a window function) and a high-resolution frequency modulator *FM_{HR}*(*k, n*). Typically, the high-resolution analysis prototype filter is identical for each high-resolution analysis filter of the high-resolution analysis filter bank. The high-resolution frequency modulator *FM_{HR}*(*k, n*) may comprise a sinusoidal function such as a cosine, and/or a sine, and/or a complex exponential function. The high-resolution analysis filters of the high-resolution analysis filter bank may be given as ${k}_{HR , k} \left(n\right) = {h}_{HR} \left(n\right) {FM}_{HR} \left(k, n\right) .$

In a particular embodiment, the high-resolution analysis filters of the high-resolution analysis filter bank comprise the complex exponential function, such that the high-resolution analysis filters of the high-resolution analysis filter bank are given as: ${h}_{HR , k} \left(n\right) = {h}_{HR} \left(n\right) exp \left(\frac{j 2 π \left(n-{τ}_{HR , h}\right) k}{{M}_{HR}}\right) ,$ where *τ_{HR,h}* is the delay of the high-resolution analysis filters, *M_{HR}* is the number of frequency bands of the high-resolution analysis filter bank, and $\sqrt{- 1} = j$*.*

The high-resolution synthesis filter bank may comprise a plurality of high-resolution synthesis filters *b_{HR,k}*(*n*). Each high-resolution synthesis filter may comprise a high-resolution synthesis prototype filter *b_{HR}*(*n*) (e.g., a window function) and a high-resolution frequency modulator *FM_{HR}*(*k, n*)*.* Typically, the high-resolution synthesis prototype filter is identical for each high-resolution synthesis filter of the high-resolution synthesis filter bank. The high-resolution frequency modulator *FM_{HR}*(*k, n*) may comprise a sinusoidal function such as a cosine, and/or a sine, and/or a complex exponential function. The high-resolution synthesis filters of the high-resolution synthesis filter bank may be given as ${b}_{HR , k} \left(n\right) = {b}_{HR} \left(n\right) {FM}_{HR} \left(k, n\right) ,$

In a particular embodiment, the high-resolution synthesis filters of the high-resolution synthesis filter bank comprises the complex exponential function, such that the high-resolution synthesis filters of the high-resolution synthesis filter bank is given as ${b}_{HR , k} \left(n\right) = {b}_{HR} \left(n\right) exp \left(\frac{j 2 π \left(n-{τ}_{HR , b}\right) k}{{M}_{HR}}\right) ,$ where *τ_{HR,b}* is the delay of the high-resolution synthesis filters, *M_{HR}* is the number of frequency bands of the high-resolution synthesis filter bank, and $\sqrt{- 1} = j$*.*

In a particular embodiment, the length of the high-resolution analysis prototype filter is an odd length of *L_{HR,h}* and the length of the high-resolution synthesis prototype filter is an odd length of *L_{HR,b}.*

The system response of the high-resolution analysis filter bank and the high-resolution synthesis filter bank may be described in the z-domain by the z-transform notation as ${Y}_{HR} \left(z\right) = \frac{1}{{D}_{HR}} {\sum }_{k = 0}^{{M}_{HR} - 1} {\sum }_{d = 0}^{{D}_{HR} - 1} X \left({zW}_{{D}_{HR}}^{d}\right) {H}_{HR , k} \left({zW}_{{D}_{HR}}^{d}\right) {B}_{HR , k} \left(z\right) ,$ where ${W}_{{D}_{HR}}^{d} = exp \left(-j2πd/{D}_{HR}\right)$, and *D_{HR}* is a downsampling factor of the high-resolution analysis filter bank, and *H_{HR,k}*(·), *B_{HR,k}*(·), *X*(·), and *Y_{HR}*(·) are the high-resolution analysis prototype filters, the high-resolution synthesis prototype filters, and the processed output signal in the z-domain, respectively. Equation (26) may also be represented alternatively as: ${Y}_{HR} \left(z\right) = T {′}_{HR} \left(z\right) X \left(z\right) + {\sum }_{d = 1}^{{D}_{HR} - 1} {A}_{HR , d} \left(z\right) X \left({zW}_{{D}_{HR}}^{d}\right) ,$ where *T'_{HR}*(*z*) is the high-resolution total system response of the high-resolution analysis filter bank and the high-resolution synthesis filter bank without the sub-band-filters, and *A_{HR,d}*(*z*) represents the aliasing response of the high-resolution analysis filter bank and the high-resolution synthesis filter bank. The high-resolution system response of the high-resolution analysis filter bank and the high-resolution synthesis filter bank may be divided into a desired term comprising the high-resolution total system response *T'_{HR}*(*z*)*X*(*z*) without the one or more sub-band filters and an undesired term comprising the aliasing response ${\sum }_{d = 1}^{{D}_{HR} - 1} {A}_{HR , d} \left(z\right) X \left({zW}_{{D}_{HR}}^{d}\right)$*.* The high-resolution total system response without the one or more sub-band filters may be expressed as $T {′}_{HR} \left(z\right) = \frac{1}{{D}_{HR}} {\sum }_{k = 0}^{{M}_{HR} - 1} {H}_{HR , k} \left(z\right) {B}_{HR , k} \left(z\right) .$

The time domain equivalent may be expressed as: $t {′}_{HR} \left(n\right) = \frac{1}{{D}_{HR}} {\sum }_{k = 0}^{{M}_{HR} - 1} {h}_{HR , k} \left(z\right) ∗ {b}_{HR , k} \left(z\right) ,$ where _{*} denotes the convolution. The aliasing term *A_{HR,d}*(*z*) maybe expressed as ${A}_{HR , d} \left(z\right) = \frac{1}{{D}_{HR}} {\sum }_{m = 0}^{{M}_{HR} - 1} {H}_{HR , k} \left({zW}_{{D}_{HR}}^{d}\right) {B}_{HR , k} \left(z\right) ,$

The time domain equivalent of the high-resolution aliasing term may be expressed as: ${a}_{HR , d} \left(n\right) = \frac{1}{{D}_{HR}} {\sum }_{k = 0}^{{M}_{HR} - 1} {h}_{HR , k} \left(n\right) exp \left(\frac{j 2 πd}{{D}_{HR}}\right) ∗ {b}_{HR , k} \left(z\right) ,$

The high-resolution noise reduction gains are now introduced into the expression by specifically including the high-resolution noise reduction gains *F_{HR,k}*(z*^{D_{HR}}*) (which may be based on the method(s) presented in the section related to signal model and noise reduction) in the expression of the high-resolution total system response so that the second system response in the z-domain is given as ${T}_{HR} \left(z\right) = \frac{1}{{D}_{HR}} {\sum }_{k = 0}^{{M}_{HR} - 1} {H}_{HR , k} \left(z\right) {B}_{HR , k} \left(z\right) {F}_{HR , k} \left({z}^{{D}_{HR}}\right) .$

For conciseness, the expression is simplified so that the terms that corresponding to the system response of the high-resolution analysis filter bank and the high-resolution synthesis filter bank are collected in the expression *Q_{HR,k}*(*z*) = *H_{HR,k}*(*z*)*B_{HR,k}*(*z*), such that second system response is ${T}_{HR} \left(z\right) = \frac{1}{{D}_{HR}} {\sum }_{k = 0}^{{M}_{HR} - 1} {Q}_{HR , k} \left(z\right) {F}_{HR , k} \left({z}^{{D}_{HR}}\right) .$

Likewise, the second system response can be represented in a time domain equivalent given as $\begin{matrix}{t}_{HR} \left(n\right) = {\sum }_{k = 0}^{{M}_{HR} - 1} {q}_{HR , k} \left(n\right) ∗ {\sum }_{l = 0}^{{L}_{HR , f} - 1} {f}_{HR , k} \left(l\right) δ \left(n-{lD}_{HR}\right) \\ = {\sum }_{l = 0}^{{L}_{HR , f} - 1} {\sum }_{k = 0}^{{M}_{HR} - 1} \left({q}_{HR , k}\left(n\right)∗δ\left(n-{lD}_{HR}\right)\right) {f}_{HR , k} \left(l\right) ,\end{matrix}$ where *L_{HR,f}* may be set equal to a value of '1' for high-resolution noise reduction gains. If *L_{HR,f}* is larger than the high-resolution noise reduction gains become one or more sub-band filters in the second signal processing system.

The expression *Q_{HR,k}*(*z*) = *H_{HR,k}*(*z*)*B_{HR,k}*(*z*) may only need to contain either the system response of the high-resolution analysis filter bank or the high-resolution synthesis filter bank, i.e., *Q_{HR,k}*(*z*) = *H_{HR,k}*(*z*) or *Q_{HR,k}*(*z*) = *B_{HR,k}*(*z*). In a particular embodiment, the expression *Q_{HR,k}*(*z*) contains both *H_{HR,k}*(*z*) and *B_{HR,k}*(*z*)*.*

### Determining the one or more sub-band filters based on the first system response and the second system response:

For convenience and conciseness, the first system response and the second system response may be represented in matrix form. The matrix form of the first system response in the time domain may be expressed as ${t}_{LR} = {{Q}^{˜}}_{LR} {{F}^{˜}}_{LR} = \left[{Q}_{LR , 0}⋯{Q}_{LR , {L}_{LR , F} - 1}\right] \left[\begin{matrix}{F}_{LR} \left(0\right) \\ ⋮ \\ {F}_{LR} \left({L}_{LR , f}-1\right)\end{matrix}\right] = \left[\begin{matrix}⋮ \\ {t}_{LR} \left(n\right) \\ ⋮\end{matrix}\right] ,$ where the real-valued vector **t***_{LR}* has size *L_{LR}* × 1, with *L_{LR}* = *L_{LR,h} + L_{LR,b} +* (*L_{LR,f} -* 1)*D_{LR}* + 1 - 2, complex-valued matrix **Q̃***_{LR}* has size *L_{LR}* × *M_{LR}L_{LR,f}* and complex- or real-valued vector **F̃***_{LR}* has size *M_{LR}L_{LR,f}* × 1. Note that **F̃***_{LR}* may be the stacked sub-band filter coefficients, i.e., the first *M_{LR}* elements of **F̃***_{LR}* correspond to the first coefficient of the one or more sub-band filters across frequency bands, and the next *M_{LR}* elements correspond to the second sub-band filter coefficient across frequency bands, and so on. Note that **Q̃***_{LR}* may be constructed by concatenating zero padded versions of matrix **Q***_{LR}*.

The coefficient vector **F***_{LR}* may be redundant for real-valued signals, because the $k = \frac{{M}_{LR}}{2} + 1 , .. , {M}_{LR} - 1$ bands are the complex conjugated (and swapped) version of the frequency bands $k = 1 , … , \frac{{M}_{LR}}{2} - 1$ (i.e., Hermitian symmetric) due to the electrical audio input signal being real-valued. Note that frequency bands *k* = 0 and $k = \frac{{M}_{LR}}{2}$ may be real-valued.

The coefficient vector **F***_{LR}* may be redefined such that the imaginary parts $k = 1 , … , \frac{{M}_{LR}}{2} - 1$ are moved to $k = \frac{{M}_{LR}}{2} + 1 , .. , {M}_{LR} - 1$ such that **F***_{LR}* becomes real-valued. Consequently, **Q***_{LR}* is redefined and denote **F***_{LR}* and **Q***_{LR}* as ${F}_{LR}^{′}$ and ${Q}_{LR}^{′}$ so that: ${F}_{LR}^{′} = \left[{f}_{LR , 0},Re\left\{{f}_{LR , 1}\right\}⋯Re\left\{{f}_{\frac{{M}_{LR}}{2} - 1}\right\},{f}_{\frac{{M}_{LR}}{2}},Im\left\{{f}_{\frac{{M}_{LR}}{2} + 1}\right\}⋯Im\left\{{f}_{{M}_{LR} - 1}\right\}\right] .$

To rewrite **Q***_{LR}*, we need the following general properties: Let's assume 2 complex numbers: *a* = *aᵣ + j aᵢ, b* = *bᵣ + j bᵢ,* where it is desired to rewrite the vector product [*a, a**] [*b, b**]*^{T}* into the form [*x, y*] [*bᵣ, bᵢ*]*^{T},* where *T* refers to the transposition of a vector or matrix. Rearranging leads to: $\begin{matrix}\left[a,a*\right] {\left[b,b*\right]}^{T} = ab + a * b * \\ = {ab}_{r} + {jab}_{i} + a * {b}_{r} - ja * {b}_{i} \\ = \left(a+a*\right) {b}_{r} + j \left(a-a*\right) {b}_{i} \\ = \left[\left(a+a*\right),j\left(a-a*\right)\right] {\left[{b}_{r}, {b}_{i}\right]}^{T} \\ = \left[2{a}_{r},-2{a}_{i}\right] {\left[{b}_{r}, {b}_{i}\right]}^{T} ,\end{matrix}$ where: ${Q}_{LR} = \left[⋯{q}_{LR , k}⋯\right]$ ${Q}_{LR}^{′} = \left[{q}_{LR , 0},2Re\left\{{q}_{LR , 1}\right\}⋯2Re\left\{{q}_{LR , \frac{M}{2} - 1}\right\},{q}_{LR , \frac{M}{2}},-2Im\left\{{q}_{LR , 1}\right\}⋯-2Im\left\{{q}_{LR , \frac{M}{2} - 1}\right\}\right]$ ${{Q ′}^{˜}}_{LR} = \left[Q{′}_{LR , 0}⋯Q{′}_{LR , {L}_{F} - 1}\right] ,$ and hence ${t}_{LR} = {{Q ′}^{˜}}_{LR} {{F ′}^{˜}}_{LR}$, with ${{Q ′}^{˜}}_{LR}$ depending on the low-resolution analysis and/or synthesis filter bank parameters: *M_{LR}, D_{LR}, L_{LR,h}, L_{LR,b}, L_{LR,f}, h_{LR}*(*n*), and *b_{LR}*(*n*).

The high-resolution signal processing system is denoted *SPS_{HR}* and low-resolution signal processing system is denoted *SPS_{LR}.* Both signal processing systems have their own specific analysis filter bank, sub-band filter or noise reduction gain, synthesis filter bank parameter sets. The first system response is given by ${t}_{LR} = {{Q ′}^{˜}}_{LR} {{F}^{˜}}_{LR}^{′}$ which may be parameterized by the low-resolution configurable parameters *M_{LR}, D_{LR}, L_{LR,h}, L_{LR,b}, L_{LR,f}, h_{LR}*(*n*)*,* and *b_{LR}*(*n*)*,* where:
*M_{LR}:* is the FFT size of the low-resolution analysis filter bank and the inverse FFT size of the low-resolution synthesis filter bank.
*D_{LR}:* is the downsampling and upsampling factor of the low-resolution analysis filter bank and low-resolution synthesis filter bank.
*L_{LR,h}:* is the filter length (i.e. number of coefficients) of the low-resolution prototype analysis filters.
*L_{LR,b}:* is the filter length (i.e. number of coefficients) of the low-resolution prototype synthesis filters.
*L_{LR,f}:* is the filter length (i.e. number of coefficients) of the low-resolution one or more sub-band filters.
*h_{LR}*(*n*): is the low-resolution prototype analysis filters.
*b_{LR}*(*n*): is the low-resolution prototype synthesis filters.

The second system response is given by ${t}_{HR} = {{Q ′}^{˜}}_{HR} {{F}^{˜}}_{HR}^{′}$ which may be parameterized by the high-resolution configurable parameters *M_{HR}, D_{HR}, L_{HR,h}, L_{HR,b}, L_{HR,f}, h_{HR}*(*n*), and *b_{HR}*(*n*), where:
*M_{HR}:* is the FFT size of the high-resolution analysis filter bank and the inverse FFT size of the high-resolution synthesis filter bank.
*D_{HR}:* is the downsampling and upsampling factor of the high-resolution analysis filter bank and high-resolution synthesis filter bank.
*L_{HR,h}:* is the filter length (i.e. number of coefficients) of the high-resolution prototype analysis filters.
*L_{HR,b}:* is the filter length (i.e. number of coefficients) of the high-resolution prototype synthesis filters.
*L_{HR,f}:* is the filter length (i.e. number of coefficients) of the high-resolution one or more sub-band filters, and in the case where the second signal processing system comprises the high-resolution noise reduction gains, the filter length is equal to 1, i.e., *L_{HR,f}* = 1.
*h_{HR}*(*n*): is the high-resolution prototype analysis filters.
*b_{HR}*(*n*): is the high-resolution prototype synthesis filters.

The first signal processing system *SPS_{HR}* comprises a plurality of high-resolution noise reduction gains, e.g., one high-resolution noise reduction gain for each frequency band. In this configuration, the high-resolution noise reduction gains may be considered a special case of high-resolution one or more sub-band filters with only one sub-band filter coefficient, i.e., *L_{HR,f}* = 1.

The next objective at hand is to realize the second system response **t***_{HR}* with the first system response ${t}_{LR} = {{Q ′}^{˜}}_{LR} {{F}^{˜}}_{LR}^{′}$*,* e.g., achieving the same or a close approximation of the second signal processing system with the use of the first signal processing system.

In an embodiment, *L_{LR,f}* is chosen such that *L_{LR}* ≥ *L_{HR}* where *L_{HR}* = *L_{HR,h} + L_{HR,b} +* (*L_{HR,f} -* 1)*D_{HR} +* 1 - 2, and hence: ${L}_{LR , h} + {L}_{LR , b} + \left({L}_{LR , f}-1\right) {D}_{LR} + 1 - 2 \geq {L}_{HR , h} + {L}_{HR , b} + \left({L}_{HR , f}-1\right) {D}_{HR} + 1 - 2 .$

The sub-band filter length *L_{LR,f}* may be any integer value, such as 1, 2, 4, 8, 16, or more.

The low-resolution configuration parameters for the first signal processing system *SPS_{LR}* and high-resolution configuration parameters the second signal processing system *SPS_{HR}* may be chosen by a developer or a hearing care professional.

When the configuration parameters are chosen, then ${{Q ′}^{˜}}_{HR}$ and ${{Q ′}^{˜}}_{LR}$ are known. The high-resolution noise reduction gains (i.e., when *L_{HR,f}* = 1) may be determined based on the Wiener gain so that ${{F}^{˜}}_{HR}^{′}$ is known. This leaves the one or more sub-band filters ${{F}^{˜}}_{LR}^{′}$ to be determined.

One way to determine the one or more sub-band filters ${{F}^{˜}}_{LR}^{′}$ is to solve ${{F}^{˜}}_{LR}^{′}$ to try satisfying the equation ${{Q ′}^{˜}}_{HR} {{F}^{˜}}_{HR}^{′} = {{Q ′}^{˜}}_{LR} {{F}^{˜}}_{LR}^{′}$ (i.e., **t***_{HR}* = **t***_{LR}*). This can be achieved by approximating this equality, for example based on the method of least squares such that: ${{F}^{˜}}_{LR}^{′} = arg {min}_{{F}^{˜} ′} {\left‖{t}_{HR}-{{Q ′}^{˜}}_{LR}{F}^{˜}′\right‖}^{2} ,$

Other methods may be used to approximate ${{Q ′}^{˜}}_{HR} {{F}^{˜}}_{HR}^{′} = {{Q ′}^{˜}}_{LR} {{F}^{˜}}_{LR}^{′}$ for example based on mean-square-error, mean-absolute-error, etc., and therefore not limited to the optimization problem in equation (36).

The optimization problem in equation (36) has a with a closed-form solution, i.e., the least squares solution, which can be obtained by taking the derivatives with respect to **F̃'** and solving for F̃'. The solution is found by computing ${{F}^{˜}}_{LR}^{′} = {\left({{Q ′}^{˜}}_{LR}\right)}^{+} {t}_{HR} = {\left({{Q ′}^{˜}}_{LR}\right)}^{+} {{Q ′}^{˜}}_{HR} {{F}^{˜}}_{HR}^{′}$, where ${\left({{Q ′}^{˜}}_{LR}\right)}^{+}$ is the pseudoinverse of ${{Q ′}^{˜}}_{LR}$ given as ${\left({{Q ′}^{˜}}_{LR}\right)}^{+} = {\left({\left({{Q ′}^{˜}}_{LR}\right)}^{H}\left({{Q ′}^{˜}}_{LR}\right)\right)}^{- 1} {\left({{Q ′}^{˜}}_{LR}\right)}^{H} .$

In some other embodiments, an iterative solver, e.g., gradient descent, may be used to determine ${{F}^{˜}}_{LR}^{′}$. It may be advantageous to use an iterative solver in cases where a closed-form solution may not exist for a particular optimization problem, or if it is computationally more efficient.

The matrix ${{Q}_{2}}^{˜} ′$ may be a matrix only dependent on the analysis and synthesis filter bank parameters. The matrix ${{Q}_{2}}^{˜} ′$ may be time independent, i.e., that it does not change over time. This can be advantageous since the pseudoinverse of ${{Q}_{2}}^{˜} ′$, i.e., ${\left({{Q ′}^{˜}}_{LR}\right)}^{+}$, may only need to be computed once offline and its result being used online on a hearing aid, thereby making it computationally efficient.

The pseudoinverse may be computed based on the singular value decomposition (SVD) with singular values below a threshold being set to zero. When matching the system response of the high-resolution system **t***_{HR}* to the low-resolution system **t***_{LR}* in this way, the system delay of the second signal processing system may also be included in the design of the one or more sub-band filters. This may not be desirable, and it is preferable to preserve the system delay of the first signal processing system. Ideally, it is desirable to maintain the system delay of first signal processing system including one or more sub-band filters unchanged although difficult to perfectly achieve. Therefore, the delay introduced by the one or more sub-band filters should be kept as low as possible, preferably zero.

Prior to determining ${{F}^{˜}}_{LR}^{′} = {\left({{Q ′}^{˜}}_{LR}\right)}^{+} {t}_{HR}$, the system delay in the second signal processing **t***_{HR}* may be reduced. In an exemplary embodiment, the system delay may be reduced by determining a minimum phase equivalent based on the minimum phase property. The system delay may be understood as the phase response or the group delay. Subsequently, the system delay may be adjusted to match the system delay of first signal processing system.

It is also possible to determine high-resolution noise reduction gains based on low-resolution noise reduction gains. In such case, the optimization problem in equation (36) is reformulated so that the objective is to determine ${{F}^{˜}}_{HR}^{′}$ with ${{Q ′}^{˜}}_{LR} , {{F}^{˜}}_{LR}^{′}$*,* and ${{Q ′}^{˜}}_{HR}$ known. This may be useful in situations where subsequent processing schemes are operating in different domains. E.g., a noise reduction system employing a beamformer in the first signal processing system and a subsequent postfilter in the second signal processing system. In this case, the beamformer weights must be mapped to the second signal processing system to be used to compute the correct postfilter gains, which then in turn can be mapped back to the first signal processing system.

Alternative to matching the system responses of the first and second signal processing systems in the time domain, i.e., **t***_{HR}* = **t***_{LR}*, the matching may be done in the frequency domain instead.

In an example embodiment, the high-resolution noise reduction gains and/or the one or more sub-band filters are deployed in a limited number of frequency bands of the first signal processing system, where speech harmonics are dominant, e.g., at lower frequency bands. The method serves as an example, but in general the high-resolution noise reduction gains and/or one or more sub-band filters may not need to be limited to be deployed in a limited number of frequency bands.

In an example embodiment, the system response of the second signal processing system in the frequency domain where high-resolution noise reduction gain values are applied in the frequency bands *m*₁ to *m*₂ can be described by ${T}_{HR} \left(ω\right) = \frac{1}{{D}_{HR}} {\sum }_{m = {m}_{1}}^{{m}_{2}} {H}_{HR , m} \left(ω\right) {G}_{HR , m} \left(ω\right) {F}_{HR , m}$

The frequency axis ω ∈ **Ω** may be defined as the frequency range $Ω = \left[\frac{2 {πm}_{1}}{{M}_{HR}}, \frac{2 {πm}_{2}}{{M}_{HR}}\right]$. Using a set of frequency bands with K frequency bands, equation (5) may be expressed as ${T}_{HR} = {Q}_{HR} {F}_{HR} = \left[{q}_{HR , {m}_{1}}⋯{q}_{HR , {m}_{2}}\right] \left[\begin{matrix}{f}_{HR , {m}_{1}} \\ ⋮ \\ {f}_{HR , {m}_{2}}\end{matrix}\right] = \left[\begin{matrix}{T}_{HR} \left({ω}_{1}\right) \\ ⋮ \\ {T}_{HR} \left({ω}_{K}\right)\end{matrix}\right] ,$ where ${q}_{HR , m} \left(ω\right) = \frac{1}{{D}_{HR}} {H}_{HR , m} \left(ω\right) {G}_{HR , m} \left(ω\right)$ and **q***_{HR,m}* = [*q_{HR,m}*(*ω*₁) ··· *q_{HR,m}*(ω*_{K}*)]*^{T}.* Similarly, the system response of the first signal processing system in the frequency domain with one or more sub-band filters can be expression as ${T}_{LR} \left(ω\right) = \frac{1}{{D}_{LR}} {\sum }_{m = 0}^{{M}_{LR} - 1} {H}_{LR , m} \left(ω\right) {G}_{LR , m} \left(ω\right) {F}_{LR , m} \left({ωD}_{LR}\right) ,$ which can be written using a matrix notation as ${T}_{LR} = {{Q}^{˜}}_{LR} {{F}^{˜}}_{LR} = \left[{Q}_{LR , 0}⋯{Q}_{LR , {L}_{LR , f} - 1}\right] \left[\begin{matrix}{F}_{LR} \left(0\right) \\ ⋮ \\ {F}_{LR} \left({L}_{LR , f}-1\right)\end{matrix}\right] = \left[\begin{matrix}{T}_{LR} \left({ω}_{1}\right) \\ ⋮ \\ {T}_{LR} \left({ω}_{K}\right)\end{matrix}\right] ,$ where **Q***_{LR,i}* = diag ([*e^{-jω_{K}iD_{LR}}* ... *e^{-jω_{K}iD_{LR}}*]*^{T}*) **Q***_{LR}* and **F***_{LR}*(*i*) = [*f*_{*LR,m*₁}(*i*) ··· *f*_{*LR,m*₂}(*i*)]*^{T}.* Using the expressions of **T***_{HR}* and **T***_{LR}* definitions, the one or more sub-band filters of **T***_{LR}* can be determined. Determining the one or more sub-band filters follows a similar approach as to the time domain case, i.e. trying to approximate **T***_{HR}* = **T***_{LR}* so that **Q***_{HR}***F***_{HR} =* **Q̃***_{LR}***F̃***_{LR}* which for instance may be determined based on least squares, mean-square-error, or mean-absolute-error, etc. In a particular embodiment, the second signal processing system comprises high-resolution noise reduction gains such that *L_{HR,f}* = 1. In a particular embodiment, the one or more sub-band filters are determined based on least squares such that ${{F}^{˜}}_{LR}^{′} = arg {min}_{{F}^{˜}} {\left‖{T}_{HR}-{{Q}^{˜}}_{LR}{F}^{˜}\right‖}^{2} ,$ where the closed-form solution is given as ${{F}^{˜}}_{LR} = {\left({\left({{Q}^{˜}}_{LR}\right)}^{H}\left({{Q}^{˜}}_{LR}\right)\right)}^{- 1} {\left({{Q}^{˜}}_{LR}\right)}^{H} {{Q}^{˜}}_{HR} {{F}^{˜}}_{HR} .$

Alternative to the closed-form solution, the optimization problem in equation (42) may be solved by an iterative solver such as gradient descent. Similar to the time domain case, it may be desirable to preserve the system delay of the first signal processing system or ensure that the system delay when introducing the one or more sub-band filters does not significantly increase the system delay of the first signal processing system. This may be achieved by transforming **T***_{HR}* to a minimum phase transfer function prior to determining **F̃***_{LR}*. The log frequency response of **T***_{HR}*(*ω*) is ${lnT}_{HR} \left(ω\right) = ln \left|{T}_{HR}\left(ω\right)\right| + j {Φ}_{HR} \left(ω\right) ,$ i.e., splitting the frequency response in a real-valued term ln|*T_{HR}*(*ω*)| related to the magnitude and an imaginary-valued term *j*Φ_{HR}(*ω*) (the linear phase function) related to the phase. For a minimum phase frequency response, the linear phase function may be replaced by a minimum phase function computed from the magnitude by the Hilbert Transform - 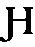 {·}. The input to the Hilbert transform is the log magnitude spectrum ln|*T*(*ω*)| and the output is the minimum phase function Φ*ₘᵢₙ* (*ωₖ*), sampled with a set of *K* frequency bands in the interval $Ω = \left[\frac{2 {πm}_{1}}{{M}_{HR}}, \frac{2 {πm}_{2}}{{M}_{HR}}\right]$ with ${ω}_{0} = \frac{2 {πm}_{1}}{{M}_{HR}}$ and ${ω}_{K - 1} = \frac{2 {πm}_{2}}{{M}_{HR}}$ where

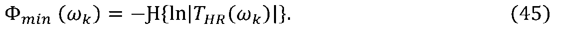

An efficient implementation may be through the Fast Fourier Transform ( 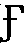 ) and the inverse Fourier Transform ( 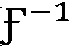 ) 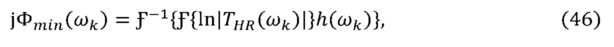 where: $h \left({ω}_{k}\right) = \left\{\begin{matrix}0 & for k = 0 and k = \frac{K}{2} \\ - 1 & for k = 1 , … , \frac{K}{2} - 1 \\ + 1 & for k = \frac{K}{2} + 2 , … , K - 1\end{matrix}\right.$

The sub-band filter length may be chosen so that ${L}_{LR , f} = \left⌈\left.{L}_{HR}-{L}_{LR , h}-{L}_{LR , b}+2-1\right)/{D}_{LR}\right⌉ + 1$ , the number of sub-band filter coefficients may potentially become large. In the case of an oversampled low-resolution analysis filter bank i.e., *D_{LR} < M_{LR},* the sub-band spectrum may have redundant information, which can be exploited in the choice of the one or more sub-band filters. Therefore, a downsampler may be used to reduce the number of sub-band filter coefficients. For example, with half of the sub-band spectrum being redundant, the one or more sub-band filters may be chosen to have every second sub-band filter coefficient equal to zero. This is equivalent to choosing half the sub-band filter length and up sample the sub-band filter coefficient series with a factor of two. The number of multiplications necessary for the sub-band filtering operations can be reduced in this way.

Let *P* denote a factor, such that every *P*-th coefficient of the one or more sub-band filters is used and the *P* - 1 coefficients in between the used sub-band filter coefficients are forced to zero. In the system response of the first signal processing system, this may be expressed as: ${T}_{LR} \left(ω\right) = \frac{1}{{D}_{LR}} {\sum }_{m = 0}^{{M}_{LR} - 1} {H}_{LR , m} \left(ω\right) {G}_{LR , m} \left(ω\right) {F}_{LR , m} \left(ωDP\right) ,$ where *F_{LR,m}*(*ω*) is the system response of the sub-band filter ${F}_{LR , m} \left(ω\right) = {\sum }_{i = 0}^{{L}_{LR , f} - 1} {f}_{LR , {m}_{1}} \left(i\right) {e}^{- jωi} ,$ which leads to a minor change in the definition of the basis function matrix: ${Q}_{LR , i} = diag \left({\left[{e}^{- {jω}_{1} {iD}_{LR} P}⋯{e}^{- {jω}_{K} {iD}_{LR} P}\right]}^{T}\right) {Q}_{LR} .$

Although the examples above use definitions of **Q***_{LR,i}* to contain system responses of the analysis filter banks and the synthesis filter banks, other examples may only need to include either the system responses of the analysis filter banks or the synthesis filter banks.

### A method for providing an audible processed sound

In an aspect of the present disclosure, a method for providing an audible processed sound is provided. The method can be performed by a hearing aid. The method comprises receiving, by an input unit, a picked-up sound. The method comprises providing, by the input unit, an electrical audio input signal representative of the picked-up sound. The method comprises providing, by a first signal processing system comprising a low-resolution analysis filter bank, *M_{LR}* numbers of first sub-band input signals based on the electrical audio input signal. The method comprises providing, by the first signal processing system comprising one or more sub-band filters, a plurality of processed sub-band signals based on filtering the first sub-band input signals using the one or more sub-band filters. The method comprises providing, by a second signal processing system comprising a high-resolution analysis filter bank, *M_{HR}* numbers of second sub-band input signals based on the electrical audio input signal, and wherein *M_{HR}* is larger than *M_{LR}.* The method comprises determining, by the second signal processing system comprising a sub-band filter estimator, the one or more sub-band filters of the first signal processing system based on the second sub-band input signals to reduce noise in the first sub-band input signals. The method comprises providing, by the first signal processing system comprising a low-resolution synthesis filter bank, a processed output signal based on the processed sub-band signals. The method comprises providing, by an output unit comprising a loudspeaker, the audible sound based on the processed output signal.

In an embodiment, a method for determining the one or more sub-band filters comprises converting, by the sub-band filter estimator, high-resolution noise reduction gains to the real-valued vector **F̃***_{HR}'*. The method comprises computing, by the sub-band filter estimator, a (time domain) system response of the second signal processing system so that **t***_{HR}* = **Q̃***_{HR}'***F̃***_{HR}'.* The method comprises reducing the system delay in **t***_{HR}*, by the sub-band filter estimator, to the system delay of the first signal processing system based on the minimum phase property. The reduced system delay second signal processing system being **t**_{*HR,*min phase}. The method comprises mapping, by the sub-band filter estimator, to a sub-band filter coefficient vector by ${{F}^{˜}}_{LR}^{′} = {\left({{Q}^{˜}}_{LR}′\right)}^{+} {t}_{HR , min phase}$.

### A method for training a neural network:

In an aspect of the present disclosure, a method for training a neural network is provided. The method comprises receiving, by a sound database, a training input. The training input comprises a speech component and a noise component. The method comprises receiving, by the sound database, a training target comprising the speech component. The method comprises providing, by a high-resolution analysis filter bank, a high-resolution training sub-band input based on the training input. The method comprises determining, by the neural network comprising a plurality of neural network parameters, one or more sub-band filters based on the high-resolution training sub-band input. The method comprises providing, by a low-resolution analysis filter bank, a low-resolution training sub-band input based on the training input. The method comprises providing, by filtering the low-resolution training sub-band input using the one or more sub-band filters, a training sub-band output. The method comprises providing, by the low-resolution synthesis filter bank, a training output. The method comprises training the neural network by updating, by a network optimizer, the neural network parameters based on reducing a neural network loss between the training output and the training target.

A sound database, constituting a computer memory, may be a database comprising a plurality of recorded sound signals. A recorded sound signal may be a time segment of an electrical audio input signal or a processed version thereof. The recorded sound signal may be stored on the computer memory or initially on another computer memory before being transferred to the computer memory. The time segment may for instance be 1 second, 5 seconds, 10 seconds, or equivalent to the duration of a speech utterance of a conversation or a sentence. The electrical audio input signal may be based on a picked-up sound of a microphone. In principle, any microphone may be used to pick-up sound. In a specific embodiment, the microphones of a hearing aid can be used to pick-up sound. The recorded sound signal may be based on recorded sound by multimicrophone system comprising a plurality of microphones. Thereby, the recorded sound signal may comprise sound from the same sound scene but picked-up at different locations.

The plurality of recorded sound signals may be categorized by sound type. A sound type may be speech, animal sounds, music, natural sounds (e.g., rain, thunder, wind), or mechanical sounds (e.g., machines, tools), etc. A sound type may also be sound scenes such as the sound of a busy canteen, a busy street, a noisy car cabin, reverberation, etc.

The plurality of recorded sound signals may be categorized by sound field. A sound field may be an isotropic sound field where the sound impinging on the microphone(s) has the same intensity from all directions. For example, if the recorded sound signals is the sound of a noisy car cabin, the sound field may be approximately isotropic, i.e., the sound has approximately the same intensity from all directions. The sound field may be an anisotropic sound field where the intensity of the sound impinging on the microphone varies in intensity depending on the direction of arrival relative to the microphone (array). The sound field may be based on a point source, which may be considered as an anisotropic sound field. The intensity of the point source sound is at its maximum from the point source's direction-of-arrival relative to the microphone (array). The sound field may be a diffuse sound field, which may be characterized by having sound that are evenly distributed in all directions, with no single direction of arrival dominating.

The plurality of recorded sound signals may be categorized by target or noise. Some of the recorded sound signals may be categorized as both target and noise. A recorded sound signal categorized as a target is considered a sound signal of potential interest for a hearing aid user. For example, speech, music, specific types of alarms, may be categorized as a target. A recorded sound signal categorized as noise is considered a sound signal of little to no interest for a hearing aid user. For example, interfering speech, rain, thunder, wind, machines, tools, noise of a busy canteen, a busy street, a noisy car cabin, late reverberation. A recorded sound signal categorized as both target and noise may be speech or music. For example, a multi-talker environment may comprise a plurality of speech signals where some of the speech signals may be considered target whereas the others may be considered noise.

The plurality of recorded sound signals may be categorized by a combination of sound type, and/or sound field, and/or target, and/or noise.

A training input may be based on at least one recorded sound signal categorized as a target. A training input may be based on at least one recorded sound signal categorized as noise. The training input may be based on mixing (e.g., linearly combining) at least one recorded sound signal categorized as a target with at least one recorded sound signal being categorized as noise.

The training input may comprise a speech component. The speech component may be based on at least one recorded sound signal categorized as speech. The training input may comprise a noise component. The noise component may be based on at least one recorded sound signal categorized as noise. The training input may comprise a mixture component based on mixing (e.g. linearly combining) the speech component and the noise component.

A speech component may be a first batch comprising a plurality of recorded sound signal categorized as a speech. A noise component may be a second batch comprising a plurality of recorded sound signal categorized as noise. The training input may be a mixture of the first and second batches.

The training target may comprise a speech component. The speech component may be based on at least one recorded sound signal categorized as a speech. The speech component may be based on at least one recorded sound signal categorized as a target. Preferably, the training target comprises the speech component constituting the training input.

The high-resolution training sub-band input may be the training input processed by the high-resolution analysis filter bank.

The low-resolution training sub-band input may be the training input processed by the low-resolution analysis filter bank.

A neural network may comprise a plurality of model layers for processing of the high-resolution training sub-band inputs or a processed signal thereof. The neural network may comprise model layers for processing of a high-resolution sub-band input signals. The neural network may comprise a plurality of neural network parameters. The neural network may be configured to receive the high-resolution sub-band input signals and determine the one or more sub-band filters, i.e., determine the sub-band filter coefficients.

The neural network may be configured to operate in at least two neural network modes. The neural network may be configured to operate in a training mode. The neural network may be configured to operate in a deployment mode. In the training mode, the neural network parameters may be adjusted (i.e., trained). In the deployment mode, the neural network parameters are not adjusted and the neural network is configured to use the adjusted (i.e., trained) neural network parameters.

The training sub-band output may be the filtered low-resolution training sub-band input or a processed version thereof.

The training output may be provided by the low-resolution synthesis filter bank. The low-resolution synthesis filter bank may be configured to receive the low-resolution training sub-band output or a processed version thereof, and provide a processed training output signal. The training output may be the processed training output signal or a processed version thereof.

The training output may be a batch of training outputs. The batch of training outputs may be a plurality of training outputs if the training input is a batch of training inputs.

A neural network optimizer may be used to train the neural network. Training the neural network may comprise updating (e.g., adjusting, changing) the neural network parameters. Updating the neural network parameters may be performed according to a neural network loss. The neural network loss may be based on a loss function between the training output and the training target. The neural network loss may quantify how well the neural network is at determining the training target given the training output determined based on the training input.

To train the neural network, the neural network parameters may be initialized with initial values, The initialization may be carried out by known methods, e.g., Xavier initialization or He initialization, alternatively, the neural network may be initialized with parameters determined during a prior training session of the neural network, e.g. based on transfer learning. The initialized neural network may be provided with training input to determine the one or more sub-band filters. A training data may be a pair comprising the training input and the training target.

To train the neural network parameters, the neural network parameters can be adjusted to minimize (or maximize) the loss of the loss function. The neural network parameters may be adjusted according to an optimization algorithm, such as stochastic gradient descent, Adam optimizer, or Levenberg- Marquardt optimization. Training of the neural network may be iterated over multiple epochs. Each epoch may comprise passing the entire sound database or a portion thereof through the neural network and updating the neural network parameters accordingly.

The method for training the neural network may comprise delaying, by a delay unit, the training target with a pre-defined amount of delay.

The method for training the neural network may comprise delaying, by a delay unit, the training target equivalent (e.g., equal to, the same as) to the system delay of the low-resolution analysis filter bank and the low-resolution synthesis filter bank.

The delay unit may be configured to delay the training target by a number of samples equivalent to a duration of time. Delaying the training target may be beneficial during training of the neural network, so that the training target is delayed to approximate the system delay of the low-resolution analysis filter bank and/or the low-resolution synthesis filter bank. In this regard, delaying the training target may help the training of the neural network, so that the neural network does not try to compensate for the inherent system delay of the low-resolution analysis filter bank and/or the low-resolution synthesis filter bank, which potentially can make training of the neural network harder. Therefore, by introducing a delay into the training target, it can be easier to train the neural network to perform better. Further, the choice of the delay may affect the phase response of the one or more sub-band filters. For example, if the pre-defined delay is chosen to be larger than the system delay of the low-resolution analysis filter bank and the low-resolution synthesis filter bank, the neural network may be trained to determine the one or more sub-band filters so that the phase response of these contains delay equivalent to the difference between the pre-defined delay and the system delay of the low-resolution analysis filter bank and the low-resolution synthesis filter bank.

The pre-defined delay may be 5 ms, 10 ms, 20 ms, 50 ms, or the delay equivalent to the system delay of the low-resolution analysis filter bank, and/or the low-resolution synthesis filter bank. The pre-defined delay may be set by a hearing aid developer. The pre-defined delay may be set during the initialization of the neural network parameters or before training the neural network. The pre-defined delay may be adjusted during training of the neural network, so that the pre-defined delay becomes parameter for regularization of the neural network.

The method for training the neural network may comprise determining, by a first loss function, the neural network loss as the L-norm error between the training output and the training target.

The first loss function may be based on the L-norm error between the training output and the training target, which may be defined as: ${loss 1}_{L} \left(y, t\right) = {\left‖y-t\right‖}_{L} ,$ where y represents the training output (or a batch of training outputs), *t* represents the training target (or a batch of training targets), the difference *y* - *t* is the error, ∥·∥ represents the norm, and ∥·∥*_{L}* represents the L-norm. Let the error, *y* - *t*, be a vector with size *N* if *y* and *t* are also vectors of size *N*, then the L-norm error may be defined as: ${\left‖y-t\right‖}_{L} = {\left({\sum }_{i = 1}^{N} {\left|{y}_{i}-{t}_{i}\right|}^{L}\right)}^{L} .$

In a particular embodiment, the first loss function is a L1-norm error where *L* = 1. In another particular embodiment, the first loss function is a L2-norm error where *L* = 2.

The method for training the neural network may comprise providing, by an evaluation filter bank, a training output spectrum indicative of the frequency spectrum of the training output. The method may comprise providing, by the evaluation filter bank, a training target spectrum indicative of the frequency spectrum of the training target. The method may comprise determining, by a second loss function, the neural network loss as the L-norm error between the training output spectrum and the training target spectrum.

The evaluation filter bank may be an analysis filter bank configured to transform a time domain signal into the time-frequency domain. For example, the analysis filter bank may be based on the low-resolution analysis filter bank or the high-resolution analysis filter bank. In principle, the evaluation filter bank is not restricted to same configuration of the low-resolution analysis filter bank or the high-resolution analysis filter bank, but can be of any type of analysis filter banks. For example, the evaluation filter bank may be based on the short-time Fourier transform (STFT).

The training output spectrum may be the output of the analysis filter bank of the evaluation filter bank or a processed version thereof. In an embodiment, the training output spectrum is the discrete Fourier transform (DFT) coefficients provided by the evaluation filter bank. In an embodiment, the training output spectrum the absolute-square value or absolute value of the discrete Fourier transform (DFT) coefficients provided by the evaluation filter bank. The training output spectrum may comprise the logarithmic function to represent the training output spectrum in the logarithmic domain. The training output spectrum may be represented with *Y* = *EFB*{*y*} where *EFB*{·} denotes the evaluation filter bank.

The training target spectrum may be the output of the analysis filter bank of the evaluation filter bank or a processed version thereof. In an embodiment, the training target spectrum is the discrete Fourier transform (DFT) coefficients provided by the evaluation filter bank. In an embodiment, the training target spectrum the absolute-square value or absolute value of the discrete Fourier transform (DFT) coefficients provided by the evaluation filter bank. The training target spectrum may comprise the logarithmic function to represent the training target spectrum in the logarithmic domain. The training output spectrum may be represented with *T* = *EFB*{*t*}.

The second loss function may be based on the L-norm error between the training output spectrum and the training target spectrum, which may be defined as: ${loss 2}_{L} \left(Y, T\right) = {\left‖Y-T\right‖}_{L} ,$ where *Y* represents the training output (or a batch of training output spectrums), *T* represents the training target (or a batch of training target spectrums), the difference *Y - T* is the error, ∥·∥ represents the norm, and ∥·∥*_{L}* represents the L-norm. In the situation where *Y* and *T* are matrices rather than scalars or vectors, the matrix version of the L-norm error may be used.

The method for training the neural network may comprise providing, by the first loss function, a first loss as the L-norm error between the training output and the training target. The method may comprise providing, by the second loss function, a second loss as the L-norm error between the training output spectrum and the training target spectrum. The method may comprise determining the neural network loss as a combination of the first and second loss.

The combination of the first and second loss may be a linear combination. The linear combination may comprise a loss weight represented by *λ* which may be multiplied on the first loss and/or second loss. In an exemplary embodiment, the linear combination of the first and second loss may be given as ${loss 3}_{L} \left(y, t\right) = {loss 1}_{L} \left(y, t\right) + λ ⋅ {loss 2}_{L} \left(EFB\left\{y\right\},\left\{EFB\left\{t\right\}\right.\right)$ where loss3_{L}(*Y*, *T*) is a third loss which is the combination of the first and second loss. In an exemplary embodiment, the combination of the first and second loss may be given as ${loss 3}_{L} \left(y, t\right) = \left(1-λ\right) ⋅ {loss 1}_{L} \left(y, t\right) + λ ⋅ {loss 2}_{L} \left(EFB\left\{y\right\},\left\{EFB\left\{t\right\}\right.\right) .$

The loss weight may be a value between 0 and 1. However, in principle, the loss weight may be any value.

The method for training the neural network may comprise providing, by an acoustic simulator, the speech component by filtering the speech component with an acoustic impulse response or an acoustic transfer function provided by an acoustic database. The acoustic transfer function may be the frequency domain representation of the acoustic impulse response.

An acoustic simulator may comprise an algorithm for modifying the speech component of the training input related to its acoustics. The acoustic simulator may comprise the acoustic impulse response. Modifying the speech component with the acoustic impulse response may provide a modified speech component that resembles real-world speech signals more realistically. Thereby, the neural network may be trained on more realistic training inputs, so that it may perform better in real-world situations.

The acoustic database may comprise a plurality of acoustic impulse responses. The plurality of acoustic impulse responses may be impulse responses measured in different environments such as a sound studio, a canteen, a street, a car, etc. The plurality of acoustic impulse responses may be simulated impulse responses based on a simulation model representing an environment.

The method for training the neural network may comprise providing, by the acoustic simulator, the noise component by filtering the noise component with an acoustic impulse response provided by an acoustic database. The acoustic impulse response may be the impulse response measured from a sound source in an acoustic environment to a microphone in the acoustic environment.

The acoustic impulse response may be a head-related impulse response (i.e. the time domain version of a head-related transfer function). The head-related impulse response may be the impulse response from the location of the sound source to the location of the microphone(s) of a hearing aid. The head-related impulse response may include head and torso acoustics of a hearing aid user or a head-and-torso simulator (HATS).

The acoustic impulse response may be a room impulse response. The room impulse response may be the impulse response from the location of the sound source to the location of the microphone(s) of a hearing aid. The head-related impulse response may include reverberation of a sound environment where the sound source and microphone are located. The room impulse response may include sound reflection from the sound source being reflected by surfaces.

A training system may comprise a computer for carrying out the method for training the neural network. The training system may comprise the sound database. The training system may comprise the neural network for training. The training system may comprise the first and second signal processing system during training of the neural network.

### A hearing aid comprising a neural network

In an aspect, a hearing aid comprises a neural network. The neural network may be a trained neural network. The neural network may be trained according to the method for training a neural network.

The neural network may comprise an input layer. The neural network may comprise one or more intermediate layers (e.g., hidden layers). The neural network may comprise an output layer. The neural network may be configured to provide one or more sub-band filters by forward propagating a neural network input through the input layer, hidden layers, and the output layer. In the training mode, the neural network input may be the high-resolution training sub-band input. In the deployment mode, the neural network input may be the high-resolution sub-band input.

The model layers may comprise an input layer. The model layers may comprise one or more intermediate layers. The model layers may comprise an output layer. Each model layer, such as the input layer, one or more intermediate layer, or output layer may comprise one or more nodes. Each node may be configured to provide a layer output (e.g. an input layer output) by linearly combining the inputs of the node and applying an activation function. The activation function is a non-linear function that introduces non-linearity. The linear combination may be performed using layer weights and biases constituting the plurality of neural network parameters. The input of a node may in some embodiments be based on the previous output of the respective node in the case of a recurrent neural network.

The input layer of the neural network may be viewed as the layer where data is fed into the neural network. The data may be the high-resolution training sub-band input. The data may be the high-resolution sub-band input. The data may further include the previous output of the input layer in the case of a recurrent neural network. The input layer may comprise a feedforward network. The feedforward network may comprise a plurality of feedforward weights constituting the neural network parameters. The input layer may comprise a convolutional layer. The convolutional may comprise a plurality of convolutional filters. Each convolutional filter may comprise a plurality of convolutional filter weights constituting the neural network parameters. The input layer may comprise a recurrent network. The recurrent network may comprise a plurality of recurrent weights constituting the neural network parameters.

The one or more intermediate layers may perform various computations and transformations on the input data to extract features and patterns.

The input layer, or intermediate layer, or output layer may comprise a convolutional layer. The input layer, or intermediate layer, or output layer may comprise a recurrent layer.

The output layer may comprise a feedforward layer. The output layer may comprise a linear activation function. The output layer may be a feedforward layer. The output layer may be a transpose convolutional layer.

The activation functions of the input layer and one or more intermediate layers may be non-linear such as a rectified linear unit (ReLU), a sigmoid function, a hyperbolic tangent function, etc. The activation function of the output layer may be linear.

### Hearing aid:

In a continued aspect of the hearing aid in section "A hearing aid", the hearing aid may be adapted to provide a frequency dependent gain and/or a level dependent compression and/or a transposition (with or without frequency compression) of one or more frequency ranges to one or more other frequency ranges, e.g. to compensate for a hearing impairment of a user. The hearing aid may comprise a signal processor for enhancing the input signals and providing a processed output signal. The signal processor may comprise one or more signal processing systems. The signal processor may comprise the first and second signal processing systems.

The hearing aid may comprise an output unit for providing a stimulus perceived by the user as an acoustic signal based on a processed electric signal. The output unit may a vibrator of a bone conducting hearing aid. The output unit may comprise an output transducer. The output transducer may comprise a receiver (loudspeaker) for providing the stimulus as an acoustic signal to the user (e.g. in an acoustic (air conduction based) hearing aid). The output transducer may comprise a vibrator for providing the stimulus as mechanical vibration of a skull bone to the user (e.g. in a bone-attached or bone-anchored hearing aid). The output unit may (additionally or alternatively) comprise a (e.g. wireless) transmitter for transmitting sound picked up-by the hearing aid to another device, e.g. a far-end communication partner (e.g. via a network, e.g. in a telephone mode of operation, or in a headset configuration).

The input unit may comprise a wireless receiver for receiving a wireless signal comprising or representing sound and for providing an electrical audio input signal representing said sound.

The hearing aid may comprise a directional microphone system adapted to spatially filter sounds from the environment, and thereby enhance a target acoustic source among a multitude of acoustic sources in the local environment of the user wearing the hearing aid. The directional system may be adapted to detect (such as adaptively detect) from which direction a particular part of the microphone signal originates. This can be achieved in various different ways as e.g. described in the prior art. In hearing aids, a microphone array beamformer is often used for spatially attenuating background noise sources. The beamformer may comprise a linear constraint minimum variance (LCMV) beamformer. Many beamformer variants can be found in literature. The minimum variance distortionless response (MVDR) beamformer is widely used in microphone array signal processing. Ideally the MVDR beamformer keeps the signals from the target direction (also referred to as the look direction) unchanged, while attenuating acoustic sound signals from other directions maximally. The generalized sidelobe canceller (GSC) structure is an equivalent representation of the MVDR beamformer offering computational and numerical advantages over a direct implementation in its original form.

The hearing aid may be constituted by or form part of a portable (i.e. configured to be wearable) device, e.g. a device comprising a local energy source, e.g. a battery, e.g. a rechargeable battery. The hearing aid may e.g. be a low weight, easily wearable, device, e.g. having a total weight less than 100 g, such as less than 20 g, such as less than 5 g.

The hearing aid may comprise a 'forward' (or 'signal') path for processing an audio signal between an input and an output of the hearing aid. A signal processor may be located in the forward path. The signal processor may be adapted to provide a frequency dependent gain according to a user's particular needs (e.g. hearing impairment). The hearing aid may comprise an 'analysis' path comprising functional components for analyzing signals and/or controlling processing of the forward path. Some or all signal processing of the analysis path and/or the forward path may be conducted in the frequency domain, in which case the hearing aid comprises appropriate analysis and synthesis filter banks. Some or all signal processing of the analysis path and/or the forward path may be conducted in the time domain.

An analogue electric signal representing an acoustic signal may be converted to a digital audio signal in an analogue-to-digital (AD) conversion process, where the analogue signal is sampled with a predefined sampling frequency or rate fₛ, fₛ being e.g. in the range from 8 kHz to 48 kHz (adapted to the particular needs of the application) to provide digital samples xₙ (or x[n]) at discrete points in time tₙ (or n), each audio sample representing the value of the acoustic signal at tₙ by a predefined number N_{b} of bits, N_{b} being e.g. in the range from 1 to 48 bits, e.g. 24 bits. Each audio sample is hence quantized using N_{b} bits (resulting in 2^{Nb} different possible values of the audio sample). A digital sample x has a length in time of 1/fₛ, e.g. 50 µs, for *fₛ* = 20 kHz. A number of audio samples may be arranged in a time frame. A time frame may comprise 64 or 128 audio data samples. Other frame lengths may be used depending on the practical application.

The hearing aid may comprise an analogue-to-digital (AD) converter to digitize an analogue input (e.g. from an input transducer, such as a microphone) with a predefined sampling rate, e.g. 20 kHz. The hearing aids may comprise a digital-to-analogue (DA) converter to convert a digital signal to an analogue output signal, e.g. for being presented to a user via an output transducer.

The hearing aid, e.g. the input unit, may comprise a transform unit for converting a time domain signal to a signal in the transform domain (e.g. frequency domain or Laplace domain, Z transform, wavelet transform, etc.). The transform unit may be constituted by or comprise a TF-conversion unit for providing a time-frequency representation of an input signal. The time-frequency representation may comprise an array or map of corresponding complex or real values of the signal in question in a particular time and frequency range. The TF conversion unit may comprise a filter bank for filtering a (time varying) input signal and providing a number of (time varying) output signals each comprising a distinct frequency range of the input signal. The TF conversion unit may comprise a Fourier transformation unit (e.g. a Discrete Fourier Transform (DFT) algorithm, or a Short Time Fourier Transform (STFT) algorithm, or similar) for converting a time variant input signal to a (time variant) signal in the (time-)frequency domain. The frequency range considered by the hearing aid from a minimum frequency fₘᵢₙ to a maximum frequency fₘₐₓ may comprise a part of the typical human audible frequency range from 20 Hz to 20 kHz, e.g. a part of the range from 20 Hz to 12 kHz. Typically, a sample rate fₛ is larger than or equal to twice the maximum frequency fₘₐₓ, fₛ ≥ 2fₘₐₓ. A signal of the forward and/or analysis path of the hearing aid may be split into a number *NI* of frequency bands (e.g. of uniform width), where *NI* is e.g. larger than 5, such as larger than 10, such as larger than 50, such as larger than 100, such as larger than 500, at least some of which are processed individually. The hearing aid may be adapted to process a signal of the forward and/or analysis path in a number *NP* of different frequency channels (*NP* ≤ *NI*). The frequency channels may be uniform or non-uniform in width (e.g. increasing in width with frequency), overlapping or non-overlapping.

The hearing aid may comprise a voice activity detector (VAD) for estimating whether or not (or with what probability) an input signal comprises a voice signal (at a given point in time). A voice signal may in the present context be taken to include a speech signal from a human being. It may also include other forms of utterances generated by the human speech system (e.g. singing). The voice activity detector unit may be adapted to classify a current acoustic environment of the user as a VOICE or NO-VOICE environment. This has the advantage that time segments of the electric microphone signal comprising human utterances (e.g. speech) in the user's environment can be identified, and thus separated from time segments only (or mainly) comprising other sound sources (e.g. artificially generated noise). The voice activity detector may be adapted to detect as a VOICE also the user's own voice. Alternatively, the voice activity detector may be adapted to exclude a user's own voice from the detection of a VOICE.

The hearing aid may comprise an own voice detector for estimating whether or not (or with what probability) a given input sound (e.g. a voice, e.g. speech) originates from the voice of the user of the system. A microphone system of the hearing aid may be adapted to be able to differentiate between a user's own voice and another person's voice and possibly from NON-voice sounds.

The hearing aid may comprise a classification unit configured to classify the current situation based on input signals from (at least some of) the detectors, and possibly other inputs as well. In the present context 'a current situation' may be taken to be defined by one or more of
a) the physical environment (e.g. including the current electromagnetic environment, e.g. the occurrence of electromagnetic signals (e.g. comprising audio and/or control signals) intended or not intended for reception by the hearing aid, or other properties of the current environment than acoustic);
b) the current acoustic situation (input level, feedback, etc.), and
c) the current mode or state of the user (movement, temperature, cognitive load, etc.);
d) the current mode or state of the hearing aid (program selected, time elapsed since last user interaction, etc.) and/or of another device in communication with the hearing aid.

The classification unit may be based on or comprise a neural network, e.g. a recurrent neural network, e.g. a trained neural network.

The hearing aid may comprise an acoustic (and/or mechanical) feedback control (e.g. suppression) or echo-cancelling system. Adaptive feedback cancellation has the ability to track feedback path changes over time. It is typically based on a linear time invariant filter to estimate the feedback path but its filter weights are updated over time. The filter update may be calculated using stochastic gradient algorithms, including some form of the Least Mean Square (LMS) or the Normalized LMS (NLMS) algorithms. They both have the property to minimize the error signal in the mean square sense with the NLMS additionally normalizing the filter update with respect to the squared Euclidean norm of some reference signal.

The hearing aid may further comprise other relevant functionality for the application in question, e.g. compression, noise reduction, etc.

The hearing aid may comprise a hearing instrument, e.g. a hearing instrument adapted for being located at the ear or fully or partially in the ear canal of a user, e.g. a headset, an earphone, an ear protection device or a combination thereof. A hearing system may comprise a speakerphone (comprising a number of input transducers (e.g. a microphone array) and a number of output transducers, e.g. one or more loudspeakers, and one or more audio (and possibly video) transmitters e.g. for use in an audio conference situation), e.g. comprising a beamformer filtering unit, e.g. providing multiple beamforming capabilities.

### A computer readable medium or data carrier:

In an aspect, a tangible computer-readable medium (a data carrier) storing a computer program comprising program code means (instructions) for causing a data processing system (a computer) to perform (carry out) at least some (such as a majority or all) of the (steps of the) method described above, in the 'detailed description of embodiments' and in the claims, when said computer program is executed on the data processing system is furthermore provided by the present application.

By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Other storage media include storage in DNA (e.g. in synthesized DNA strands). Combinations of the above should also be included within the scope of computer-readable media. In addition to being stored on a tangible medium, the computer program can also be transmitted via a transmission medium such as a wired or wireless link or a network, e.g. the Internet, and loaded into a data processing system for being executed at a location different from that of the tangible medium.

### A computer program:

A computer program (product) comprising instructions which, when the program is executed by a computer, cause the computer to carry out (steps of) the methods described above, in the 'detailed description of embodiments', and in the claims is furthermore provided by the present application.

### A data processing system:

In an aspect, a data processing system comprising a processor and program code means for causing the processor to perform at least some (such as a majority or all) of the steps of the method described above, in the 'detailed description of embodiments' and in the claims is furthermore provided by the present application.

### A hearing system:

In a further aspect, a hearing system comprising a hearing aid as described above, in the 'detailed description of embodiments', and in the claims, AND an auxiliary device is moreover provided.

The hearing system may be adapted to establish a communication link between the hearing aid and the auxiliary device to provide that information (e.g. control and status signals, possibly audio signals) can be exchanged or forwarded from one to the other.

The auxiliary device may be constituted by or comprise a remote control, a smartphone, or other portable or wearable electronic device, such as a smartwatch or the like.

The auxiliary device may be constituted by or comprise a remote control for controlling functionality and operation of the hearing aid(s). The function of a remote control may be implemented in a smartphone, the smartphone possibly running an APP allowing to control the functionality of the audio processing device via the smartphone (the hearing aid(s) comprising an appropriate wireless interface to the smartphone, e.g. based on Bluetooth or some other standardized or proprietary scheme).

The auxiliary device may be constituted by or comprise an audio gateway device adapted for receiving a multitude of audio signals (e.g. from an entertainment device, e.g. a TV or a music player, a telephone apparatus, e.g. a mobile telephone or a computer, e.g. a PC, a wireless microphone, etc.) and adapted for selecting and/or combining an appropriate one of the received audio signals (or combination of signals) for transmission to the hearing aid.

The auxiliary device may be constituted by or comprise another hearing aid. The hearing system may comprise two hearing aids adapted to implement a binaural hearing system, e.g. a binaural hearing aid system.

The hearing aid system may comprise a hearing aid and an auxiliary device. The hearing aid may comprise the first signal processing system. The hearing aid may comprise the first signal processing system and at least a part of the second signal processing system. The auxiliary device may comprise the second signal processing system. The auxiliary device may comprise at least a part of the second signal processing system. The auxiliary device may

The auxiliary device may be configured to provide the one or more sub-band filters to the hearing aid through the communication link between the hearing aid and the auxiliary device.

The auxiliary device may comprise a neural network. The neural network may be trained according to a method for training a neural network disclosure in the present disclosure. The auxiliary device may be configured to determine at least one sub-band filter coefficient of the one or more sub-band filters based on the neural network. The auxiliary device may be configured to transmit the at least one sub-band filter coefficient to the hearing aid through a communication link between the hearing aid and the auxiliary device.

The hearing aid may be configured to transmit an electrical audio input signal or a signal based on thereof to the auxiliary device through the communication link. The electrical audio input signal being a signal picked up by a microphone constituting the hearing aid. The auxiliary device may be configured to determine the at least one sub-band filter coefficient based on the electrical audio input signal or the signal based on thereof received through the communication link.

### Definitions:

In the present context, a hearing aid, e.g. a hearing instrument, refers to a device, which is adapted to improve, augment and/or protect the hearing capability of a user by receiving acoustic signals from the user's surroundings, generating corresponding audio signals, possibly modifying the audio signals and providing the possibly modified audio signals as audible signals to at least one of the user's ears. Such audible signals may e.g. be provided in the form of acoustic signals radiated into the user's outer ears and/or acoustic signals transferred as mechanical vibrations to the user's inner ears through the bone structure of the user's head and/or through parts of the middle ear.

The hearing aid may be configured to be worn in any known way, e.g. as a unit arranged behind the ear with a tube leading radiated acoustic signals into the ear canal or with an output transducer, e.g. a loudspeaker, arranged close to or in the ear canal, as a unit entirely or partly arranged in the pinna and/or in the ear canal, as a unit, e.g. a vibrator, attached to a fixture implanted into the skull bone, etc. The hearing aid may comprise a single unit or several units communicating (e.g. acoustically, electrically or optically) with each other. The loudspeaker may be arranged in a housing together with other components of the hearing aid, or may be an external unit in itself (possibly in combination with a flexible guiding element, e.g. a dome-like element).

A hearing aid may be adapted to a particular user's needs, e.g. a hearing impairment. A configurable signal processing circuit of the hearing aid may be adapted to apply a frequency and level dependent compressive amplification of an input signal. A customized frequency and level dependent gain (amplification or compression) may be determined in a fitting process by a fitting system based on a user's hearing data, e.g. an audiogram, using a fitting rationale (e.g. adapted to speech). The frequency and level dependent gain may e.g. be embodied in processing parameters, e.g. uploaded to the hearing aid via an interface to a programming device (fitting system), and used by a processing algorithm executed by the configurable signal processing circuit of the hearing aid.

A 'hearing system' refers to a system comprising one or two hearing aids, and a 'binaural hearing system' refers to a system comprising two hearing aids and being adapted to cooperatively provide audible signals to both of the user's ears. Hearing systems or binaural hearing systems may further comprise one or more 'auxiliary devices', which communicate with the hearing aid(s) and affect and/or benefit from the function of the hearing aid(s). Such auxiliary devices may include at least one of a remote control, a remote microphone, an audio gateway device, an entertainment device, e.g. a music player, a wireless communication device, e.g. a mobile phone (such as a smartphone) or a tablet or another device, e.g. comprising a graphical interface. Hearing aids, hearing systems or binaural hearing systems may e.g. be used for compensating for a hearing-impaired person's loss of hearing capability, augmenting or protecting a normal-hearing person's hearing capability and/or conveying electronic audio signals to a person. Hearing aids or hearing systems may e.g. form part of or interact with public-address systems, active ear protection systems, handsfree telephone systems, car audio systems, entertainment (e.g. TV, music playing or karaoke) systems, teleconferencing systems, classroom amplification systems, etc.

The invention is set out in the appended set of claims.

### BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:
FIG. 1A schematically shows a first embodiment of a hearing aid according to the present disclosure; and
FIG. 1B schematically shows a second embodiment of a hearing aid according to the present disclosure.
FIG. 2 schematically shows a third embodiment of a hearing aid according to the present disclosure.
FIG. 3 schematically shows a fourth embodiment of a hearing aid according to the present disclosure.
FIG. 4 schematically shows a fifth embodiment of a hearing aid according to the present disclosure.
FIG. 5 shows a flow diagram of a first embodiment of a method for providing an audible processed sound according to the present disclosure.
FIG. 6 shows a flow diagram of a first embodiment of a method for training a neural network according to the present disclosure.
FIG. 7 schematically shows a first system for training a neural network according to the present disclosure.
FIG. 8 schematically shows a second system for training a neural network according to the present disclosure.
FIG. 9 schematically shows a first embodiment of a hearing aid comprising a neural network according to the present disclosure.
FIG. 10 schematically shows a fourth embodiment of a method for training a neural network according to the present disclosure.

The figures are schematic and simplified for clarity, and they just show details which are essential to the understanding of the disclosure, while other details are left out. Throughout, the same reference signs are used for identical or corresponding parts.

Further scope of applicability of the present disclosure will become apparent from the detailed description given hereinafter. However, it should be understood that the detailed description and specific examples, while indicating preferred embodiments of the disclosure, are given by way of illustration only. Other embodiments may become apparent to those skilled in the art from the following detailed description.

### DETAILED DESCRIPTION OF EMBODIMENTS

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include micro-electronic-mechanical systems (MEMS), integrated circuits (e.g. application specific), microprocessors, microcontrollers, digital signal processors (DSPs), field programmable gate arrays (FPGAs), programmable logic devices (PLDs), gated logic, discrete hardware circuits, printed circuit boards (PCB) (e.g. flexible PCBs), and other suitable hardware configured to perform the various functionality described throughout this disclosure, e.g. sensors, e.g. for sensing and/or registering physical properties of the environment, the device, the user, etc. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

The term 'or a processed version thereof' may e.g. cover such extracted features from an original audio signal. The term 'or a processed version thereof' may e.g. also cover an original audio signal that has been subject to a processing algorithm that applies gain or attenuation and/or delay to the original audio signal and this results in a modified audio signal (preferably enhanced in some sense, e.g. noise reduced relative to a target signal, or simply delayed).

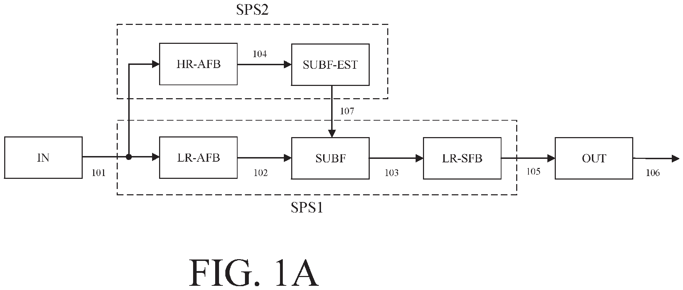

FIG. 1A shows a first example embodiment of a hearing aid according to the present disclosure. FIG. 1A shows an exemplary block diagram of a hearing aid comprising an input unit IN configured to pick-up sound and provide an electrical audio input signal 101 representing the picked-up sound.

The hearing aid comprises a first signal processing system SPS1 comprising a low-resolution analysis filter bank LR-AFB configured to provide *M_{LR}* numbers of first sub-band input signals 102 based on the electrical audio input signal 101. For example, the number of first sub-band input signals 102 may be selected to *M_{LR} =* 32, *M_{LR} =* 64, *M_{LR} =* 128, or *M_{LR} =* 256. However, the selection generally also depends on the sampling frequency. For example, for higher sampling frequencies such as 48 kHz, it may be necessary to choose *M_{LR}* = 256.

The first signal processing system SPS1 comprises one or more sub-band filters SUBF. The first signal processing system SPS1 is configured to provide a plurality of processed sub-band signals 103 based on filtering the first sub-band input signals using the one or more sub-band filters SUBF. The hearing aid comprises a second signal processing system SPS2 comprising a high-resolution analysis filter bank HR-AFB. The high-resolution analysis filter bank HR-AFB is configured to provide *M_{HR}* numbers of second sub-band input signals 104 based on the electrical audio input signal 101. The *M_{HR}* number of second sub-band input signals 104 is a factor of 4 higher than the *M_{LR}* number of first sub-band input signals. However, in any other embodiments, the factor may be any number above 0 as long as *M_{LR}* and *M_{HR}* are integers.

The number of second sub-band input signals *M_{HR}* is larger than the number of second sub-band input signals *M_{LR}.* The second signal processing system SPS2 comprises a sub-band filter estimator SUBF-EST. The sub-band filter estimator SUBF-EST is configured to determine a plurality of sub-band filter coefficients 107 of the one or more sub-band filters SUBF based on the second sub-band input signals 104 to reduce noise in the first sub-band input signals 102. The sub-band filter length *L_{LR,f}* may be any integer value, such as 1, 2, 4, 8, 16, or more.

The first signal processing system SPS1 comprising a low-resolution synthesis filter bank LR-SFB being configured to provide a processed output signal 105 based on the processed sub-band signals 104. An output unit OUT comprising a loudspeaker configured to provide an audible processed sound 106 based on the processed output signal.

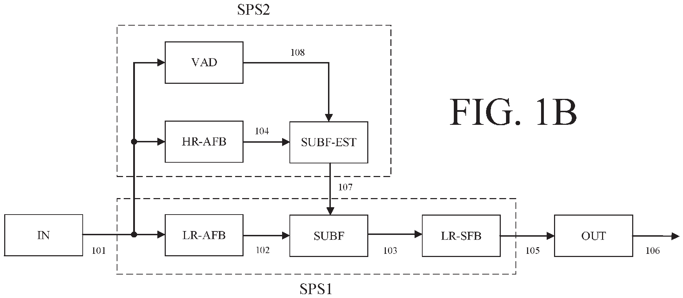

FIG. 1B shows a second embodiment of a hearing aid according to the present disclosure. FIG. 1B shows the first embodiment in FIG. 1A including a voice activity detector VAD. The embodiment of FIG. 1B can include each and/or any element of FIG. 1A. The second signal processing system SPS2 comprises the voice activity detector VAD. The voice activity detector VAD is configured to receive the electrical audio input signal 101 or a processed version thereof, and provide a voice activity detection control signal 108 indicative of whether speech is detected or not in the electrical audio input signal 101 or a processed version thereof. For example, if the voice activity detection control signal 108 is 1, it may be indicative of speech presence. The sub-band filter estimator SUBF-EST is configured to determine the sub-band filters SUBF based on the high-resolution sub-band input signals 104 and the voice activity detection control signal 108. If the voice activity detection control signal 108 is indicative of speech presence, the sub-band filter estimator SUBF-EST is configured to set the sub-band filter length to a default sub-band filter length such as *L_{LR,f} =* 16 for all sub-band filters. If the voice activity detection control signal 108 is indicative of speech absence, the sub-band filter estimator SUBF-EST is configured to set the sub-band filter length to *L_{LR,f} =* 1 for all sub-band filters, such that the sub-band filters essentially become low-resolution noise reduction gains.

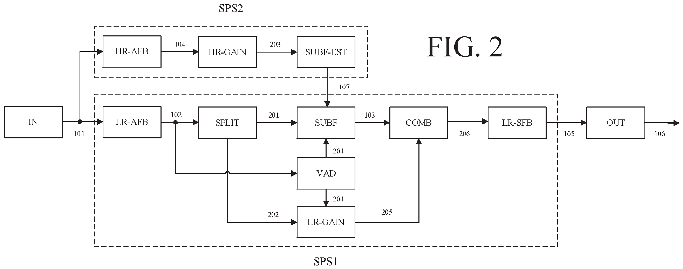

FIG. 2 shows a third embodiment of a hearing aid according to the present disclosure. FIG. 2 shows an exemplary block diagram of a hearing aid comprising an input unit IN configured to provide an electrical audio input signal 101. The embodiment of FIG. 2 can include each and/or any feature discussed above with respect to FIGS. 1A-1B.

The hearing aid comprises a first signal processing system SPS1 comprising a low-resolution analysis filter bank LR-AFB configured to provide *M_{LR}* numbers of first sub-band input signals 102 based on the electrical audio input signal 101. The hearing aid comprises a second signal processing system SPS2 comprising a high-resolution analysis filter bank HR-AFB configured to provide *M_{HR}* numbers of first sub-band input signals 104 based on the electrical audio input signal 101 where *M_{HR} > M_{LR}.*

The second signal processing system SPS2 comprises a high-resolution gain estimator HR-GAIN. The high-resolution gain estimator HR-GAIN is configured to determine high-resolution noise reduction gains 203 based on the high-resolution sub-band input signals 104. The high-resolution noise reduction gain estimator HR-GAIN may for instance determine the high-resolution noise reduction gains 203 based on (but not limited to) the Wiener gain. The second signal processing system SPS2 comprises a sub-band filter estimator SUBF-EST. The sub-band filter estimator SUBF-EST is configured to determine a plurality of sub-band filter coefficients 107 of the one or more sub-band filters SUBF based on the high-resolution noise reduction gains 203.

The hearing aid comprises a sub-band divider SPLIT configured to divide the low-frequency sub-band input signals into a lower frequency portion 201 from 2 kHz and downwards (including 2 kHz) and a higher frequency portion 202 from 2 kHz and upwards (not including 2 kHz). However, any other choice of frequency threshold may be chosen over 2 kHz (e.g., 1 kHz, 4 kHz, etc.).

The first signal processing system SPS1 comprises a voice activity detector VAD. The voice activity detector VAD is configured to receive the low-resolution sub-band input signal 102 or a processed version thereof, and provide a voice activity detection control signal 204 indicative of whether speech is detected or not in the low-resolution sub-band input signal 102 or a processed version thereof.

The first signal processing system SPS1 comprises one or more sub-band filters SUBF configured to provide a plurality of filtered sub-band signals 103 based on filtering the lower frequency portion of the low-resolution sub-band input signals 201 using the one or more sub-band filters SUBF if speech is detected present based on the voice activity detection control signal 204.

The first signal processing system SPS1 comprises a low-resolution gain estimator LR-GAIN. The low-resolution noise reduction gain estimator LR-GAIN is configured to determine low-resolution noise reduction gains based on the higher frequency portion of the low-resolution sub-band input signals 201 if speech is detected absent. The low-resolution noise reduction gain estimator LR-GAIN is configured to provide a plurality of gained sub-band signals 205 based on multiplying the higher frequency portion of the first sub-band input signals 202 with the low-resolution noise reduction gains if speech is detected present. The low-resolution noise reduction gain estimator LR-GAIN is configured to determine low-resolution noise reduction gains based on the lower frequency portion of the low-resolution sub-band input signals 201 if speech is detected absent. The low-resolution noise reduction gain estimator LR-GAIN is configured to provide a plurality of gained sub-band signals 205 based on multiplying the lower frequency portion and the higher frequency portion of the first sub-band input signals 202 with the low-resolution noise reduction gains if speech is detected absent. The low-resolution noise reduction gain estimator LR-GAIN may for instance determine the low-resolution noise reduction gains 203 based on (but not limited to) the Wiener gain.

The first signal processing system SPS1 comprises a frequency combiner COMB. If speech is detected, the frequency combiner COMB is configured to provide the processed sub-band signal 206 by combining the filtered sub-band signals 103 and the gained sub-band signals 205. The lower frequency portion of the processed sub-band signals 206 comprises the filtered sub-band signals 103 and the higher frequency portion of the processed sub-signals 206 comprises the gained sub-band signals 205. If speech is detected absent, the frequency combiner COMB is configured to provide the processed sub-band signal 206 based on the gained sub-band signals 205.

The first signal processing system SPS1 comprising a low-resolution synthesis filter bank LR-SFB being configured to provide a processed output signal 105 based on the processed sub-band signals 104. An output unit OUT comprising a loudspeaker configured to provide an audible processed sound 106 based on the processed output signal 105.

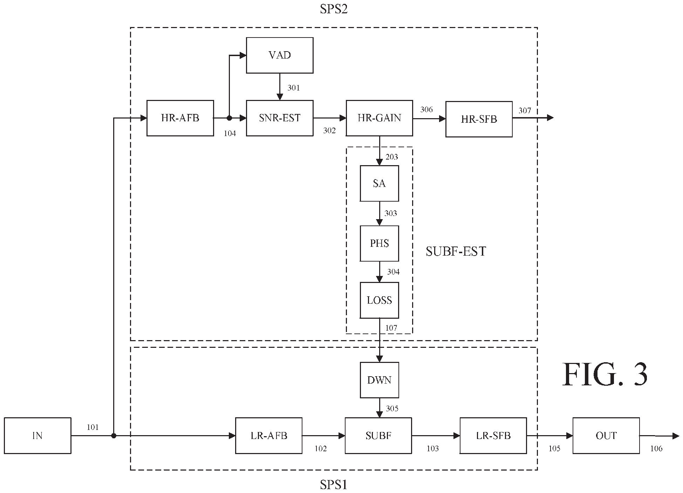

FIG. 3 shows a fourth embodiment of a hearing aid according to the present disclosure. FIG. 3 shows an exemplary block diagram of a hearing aid comprising an input unit IN configured to provide an electrical audio input signal 101. The embodiment of FIG. 3 can include each and/or any feature discussed above with respect to FIGS. 1A-2.

The hearing aid comprises a first signal processing system SPS1 comprising a low-resolution analysis filter bank LR-AFB configured to provide *M_{LR}* numbers of first sub-band input signals 102 based on the electrical audio input signal 101. The hearing aid comprises a second signal processing system SPS2 comprising a high-resolution analysis filter bank HR-AFB configured to provide *M_{HR}* numbers of first sub-band input signals 102 based on the electrical audio input signal 101 where *M_{HR} > M_{LR}.*

The second signal processing system SPS2 comprises a voice activity detector VAD configured to detect the presence of speech in each high-resolution sub-band input signal 104. The voice activity detector VAD is configured to provide a voice activity detection control signal 301 for each high-resolution sub-band input signal 104 indicative of whether the corresponding high-resolution sub-band input signal 104 is dominated by speech or noise. The second signal processing system SPS2 comprises a signal-to-noise ratio estimator SNR-EST configured to estimate a signal-to-noise ratio 302 for each high-resolution sub-band input signal 104. If the voice activity detection control signal 301 of the corresponding high-resolution sub-band input signal 104 is indicative of noise dominance, the signal-to-noise ratio estimator SNR-EST is configured to determine a noise level for each high-frequency sub-band input signal 104. If the voice activity detection control signal 301 for the corresponding high-resolution sub-band input signal 104 is indicative of speech dominance, the signal-to-noise ratio estimator SNR-EST is configured to use the previous estimate of the noise levels. The signal-to-noise ratio estimator SNR-EST is configured to determine signal-to-noise ratios based on the estimated noise levels. For example, the signal-to-noise ratios can be determined based on a ratio between the levels of the high-resolution sub-band input signals 104 and the estimated noise levels. The second signal processing system SPS2 comprises a high-resolution noise reduction gain estimator HR-GAIN configured to determine a high-resolution noise reduction gain 203 for each high-resolution sub-band input signal 104 based on the estimated signal-to-noise ratios 302. The second signal processing system SPS2 comprises a high-resolution synthesis filter bank HR-SFB.

The second signal processing system SPS2 comprises a sub-band filter estimator SUBF-EST. The sub-band filter estimator SUBF-EST comprises a system analyzer SA. The system analyzer SA is configured to determine a first system response of the first signal processing system SPS1 and a second system response of the second signal processing system SPS2 303. The sub-band filter estimator SUBF-EST comprises a phase modifier PHS configured to modify the phase response of the first signal processing system SPS1 and/or the second signal processing system SPS2 303 and provide a phase-modified system responses 304. The phase response PHS comprises a minimum phase transform configured to perform the modification of the phase response.

The sub-band filter estimator SUBF-EST comprises a system loss LOSS. The system loss LOSS is based on a mean-square-error loss. A plurality of sub-band filter coefficients 103 are determined based on least-squares between the phase modified first signal processing system SPS1 and the phase modified second signal processing system SPS2.

The first signal processing system SPS1 comprises a downsampler DWN configured to downsample the sub-band filter coefficients 107 by a factor of two and provide a plurality of downsampled sub-band filter coefficients 305. However, in principle any integer downsampling factor may be used. The downsampler is in this particular embodiment placed after the system loss, however, the downsampler can in principle be placed anywhere in between the units of the sub-band filter estimator or before it and constitute the second signal processing system SPS2.

The first signal processing system SPS1 comprises a sub-band filter SUBF for each low-resolution sub-band input signal 102. The sub-band filter SUBF is configured to provide a processed sub-band signal 103 for each low-resolution sub-band signal based on filtering the low-resolution sub-band input signal 102 using the downsampled sub-band filter coefficients 304.

The first signal processing system SPS1 comprising a low-resolution synthesis filter bank LR-SFB being configured to provide a processed output signal 105 in the time domain 105 based on the processed sub-band signals 104 in the time-frequency domain. An output unit OUT comprising a loudspeaker configured to provide an audible processed sound 106 based on the processed output signal 105.

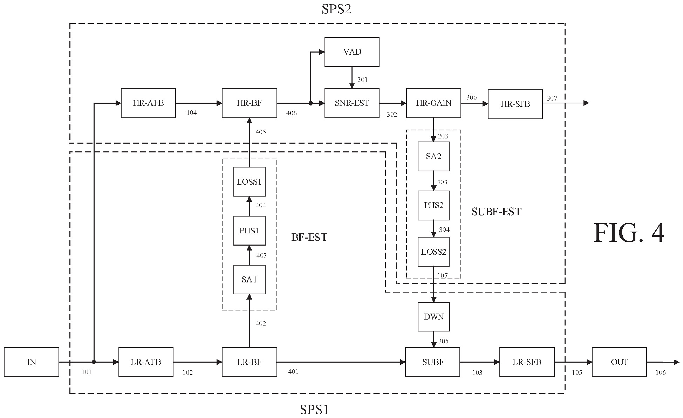

FIG. 4 shows a fifth embodiment of a hearing aid according to the present disclosure. FIG. 4 shows an exemplary block diagram of a hearing aid comprising an input unit IN configured to provide a plurality of electrical audio input signal 101. For example, the hearing aid may comprise two or more microphones to provide the electrical audio input signals 101. The embodiment of FIG. 4 can include each and/or any feature discussed above with respect to FIGS. 1A-3.

The hearing aid comprises a first signal processing system SPS1 comprising a low-resolution analysis filter bank LR-AFB configured to provide *M_{LR}* numbers of first sub-band input signals 102 for each of the plurality of electrical audio input signals 101. The hearing aid comprises a second signal processing system SPS2 comprising a high-resolution analysis filter bank HR-AFB configured to provide *M_{HR}* numbers of first sub-band input signals 102 for each of the electrical audio input signals 101 where *M_{HR} > M_{LR}.*

The first signal processing system SPS1 comprises a low-resolution beamformer LR-BF configured to provide a low-resolution beamformed signal 401 for each frequency band in the first signal processing system SPS1 by combining the plurality of first sub-band input signals 102 for each frequency band. The low-resolution beamformer LR-BF is configured to determine a low-resolution beamformer coefficient 402 for each microphone input channel of the input unit IN for example based on a minimum variance distortion-less response (MVDR) beamformer or a delay-and-sum beamformer (DSB). For example, if the number of microphone input channel is two because the hearing aid has two microphones, low-resolution beamformer LF-BF comprises two low-resolution beamformer coefficients for each frequency band.

The first signal processing system comprises a beamformer estimator BF-EST. The beamformer estimator BF-EST comprises a system analyzer SA1 configured to determine a first system response and second system response of the first and second signal processing systems 403, respectively. The beamformer estimator BF-EST comprises a phase modifier PHS configured to modify the phase response of the first signal processing system SPS1 and/or the second signal processing system SPS2. The phase response PHS1 comprises a minimum phase transform configured to perform the modification of the phase response and provide phase modified system responses 404 based on the first and second system responses 403.

The beamformer estimator BF-EST comprises a system loss LOSS1. The system loss is based on a mean-square-error loss. A plurality of high-resolution beamformer coefficients 405 is determined based on the low-resolution beamformer coefficients 402 and the modified system responses 404. The determination is based on least-squares between the first signal processing system SPS1 and the second signal processing system SPS2.

The second signal processing system SPS2 comprises a high-resolution beamformer HR-BF configured to provide a high-resolution beamformed signal 406 for each frequency band in the second signal processing system SPS2 by combining the plurality of second sub-band input signals 104 for each frequency band based on the high-resolution beamformer coefficients 405.

The second signal processing system SPS2 comprises a voice activity detector VAD configured to detect the presence of speech in each high-resolution beamformed signal 406 and provide a voice activity detection control signal 301. The second signal processing system SPS2 comprises a signal-to-noise ratio estimator SNR-EST configured to estimate a signal-to-noise ratio 302 for each high-resolution beamformed signal 406 based on the voice activity detection control signal 301 and the high-resolution beamformed signal 406.

The second signal processing system SPS2 comprises a high-resolution noise reduction gain estimator HR-GAIN configured to determine a high-resolution noise reduction gain 306 for each high-resolution beamformed signal 406 based on the estimated signal-to-noise ratios 302.

The second signal processing system SPS2 comprises a high-resolution synthesis filter bank HR-SFB.

The second signal processing system SPS2 comprises a sub-band filter estimator SUBF-EST. The sub-band filter estimator SUBF-EST comprises a system analyzer SA2, a phase modifier PHS2, and a system loss LOSS2 configured similarly to the embodiment of FIG. 3. The sub-band filter estimator SUBF-EST is configured to determine a plurality of sub-band filter coefficients 107. The first signal processing system SPS1 comprises a downsampler DWN configured to downsample the sub-band filter coefficients 107.

The first signal processing system SPS1 comprises a sub-band filter SUBF for each low-resolution beamformed signals 102. The sub-band filter SUBF is configured to provide a processed sub-band signal 103 for each low-resolution beamformed signals 401 based on the downsampled sub-band filter coefficients 107.

The first signal processing system SPS1 comprising a low-resolution synthesis filter bank LR-SFB being configured to provide a processed output signal 105 in the time domain 105 based on the processed sub-band signals 104 in the time-frequency domain. An output unit OUT comprising a loudspeaker configured to provide an audible processed sound 106 based on the processed output signal 105.

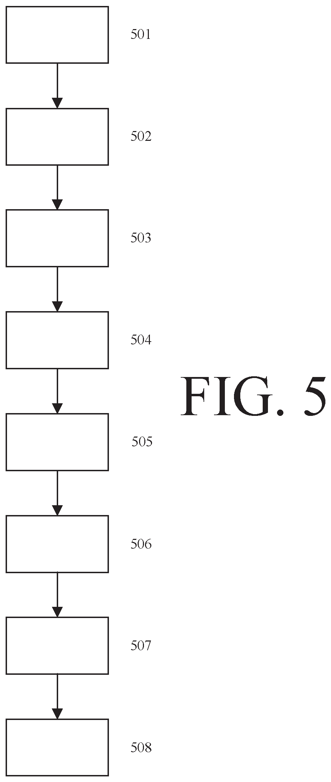

FIG. 5 shows a flow diagram of a first embodiment of a method for providing an audible processed sound according to the present disclosure. The method can be incorporated into the hearing devices shown in FIGS. 1A-4. The method comprises receiving, by an input unit IN, a picked-up sound in step 501. The method comprises providing, by the input unit IN, an electrical audio input signal 501 representative of the picked-up sound in step 502. The method comprises providing, by a first signal processing system SPS1 comprising a low-resolution analysis filter bank LR-AFB, *M_{LR}* numbers of first sub-band input signals 502 based on the electrical audio input signal in step 503. The method comprises receiving providing, by the first signal processing system SPS1 comprising one or more sub-band filters SUBF, a plurality of processed sub-band signals based on filtering the first sub-band input signals using the one or more sub-band filters SUBF in step 504. The method comprises providing, by a second signal processing system SPS2 comprising a high-resolution analysis filter bank HR-AFB, *M_{HR}* numbers of second sub-band input signals based on the electrical audio input signal, and wherein *M_{HR}* is larger than *M_{LR}* in step 505. The method comprises determining, by the second signal processing system SPS2 comprising a sub-band filter estimator SUBF-EST, the one or more sub-band filters SUBF of the first signal processing system SPS1 based on the second sub-band input signals to reduce noise in the first sub-band input signals in step 506. The method comprises providing, by the first signal processing system SPS1 comprising a low-resolution synthesis filter bank LR-SFB, a processed output signal based on the processed sub-band signals in step 507. The method comprises providing, by an output unit OUT comprising a loudspeaker, the audible sound based on the processed output signal in step 508.

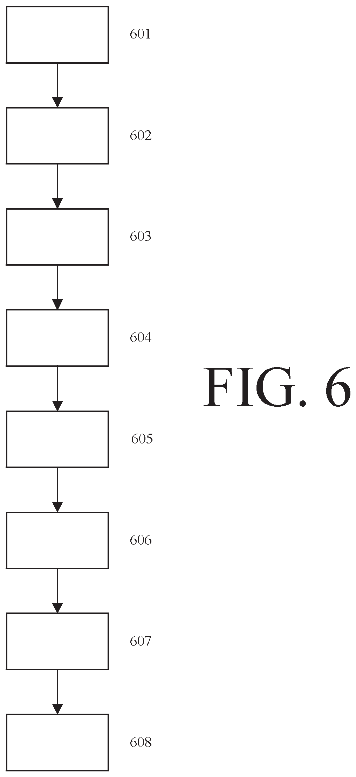

FIG. 6 shows a flow diagram of a first embodiment of a method for training a neural network according to the present disclosure. The method comprises receiving, by a sound database SDB, a training input, and wherein the training input comprises a speech component and a noise component in step 601. The method comprises receiving, by the sound database SDB, a training target comprising the speech component in step 602. The method comprises providing, by a high-resolution analysis filter bank HR-AFB, a high-resolution training sub-band input based on the training input in step 603. The method comprises determining, by the neural network NN comprising a plurality of neural network parameters, one or more sub-band filters SUBF based on the high-resolution training sub-band input in step 604. The method comprises providing, by a low-resolution analysis filter bank LR-AFB, a low-resolution training sub-band input based on the training input in step 605. The method comprises providing, by filtering the low-resolution training sub-band input using the one or more sub-band filters SUBF, a training sub-band output in step 606. The method comprises providing, by the low-resolution synthesis filter bank LR-SFB, a training output in step 607. The method comprises training the neural network NN by updating, by a network optimizer NN-OPT, the neural network parameters based on reducing a neural network loss between the training output 608 and the training target in step 608.

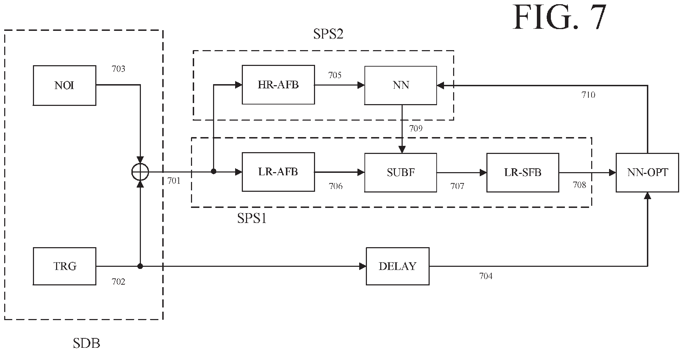

FIG. 7 schematically shows a first training system for training a neural network NN according to the present disclosure. The training system comprises a sound database SDB comprising a first database TRG of speech components, and a second database NOI comprising noise components. The first database TRG is configured to provide a speech component 702. The second database NOI is configured to provide a noise component 703. The sound database SDB is configured to linearly combine the speech component 702 and the noise component 703. The sound database SDB is configured to provide a training input 701 being the linearly combined speech 702 and noise component 703. The sound database SDB is configured to provide a training target 702 being the speech component.

The training system comprises a first signal processing system SPS1 and a second signal processing system SPS2. The first signal processing system SPS1 comprises a low-resolution analysis filter bank LR-AFB configured to provide a plurality of low-resolution training sub-band input signals 706 based on the training input 701. The first signal processing system SPS1 comprises one or more sub-band filters SUBF. The second signal processing system SPS2 comprises a high-resolution analysis filter bank HR-AFB configured to provide a plurality of high-resolution training sub-band input signals 705 based on the training input 701. The second signal processing system SPS2 comprises a neural network NN configured to determine the sub-band filters SUBF based on the high-resolution training sub-band input signals 705 and a plurality of neural network parameters. The neural network parameters being initialized at the beginning of the training of the neural network NN. The neural network NN is configured to determine the sub-band filters SUBF using the initialized neural network parameters at the beginning of the training of the neural network NN and use updated neural network parameters 710 when the neural network parameters are updated. The sub-band filters SUBF are configured to provide a plurality of processed training sub-band input signals 707 based on filtering the low-resolution training sub-band input signals 706 with the determined sub-band filters 709. The first signal processing system SPS1 comprises a low-resolution synthesis filter bank LR-SFB configured to provide a training output 708 based on the processed training sub-band signal 707.

The training system comprises a delay unit DELAY configured to provide a delayed training target 704 by delaying the training target 702 with a pre-defined amount of delay. The pre-defined amount of delay is chosen to be approximately the average system delay (e.g. group delay) of the first signal processing system SPS1 across frequency bands. For example, the system delay of the first signal processing system may be 5 ms, 10 ms, or 20 ms. In some embodiments, the pre-defined delay is allowed to be adjusted during training (e.g. a delay between 5 ms and 30 ms) so that the delay acts as a method for regularizing the determination of the neural network parameters.

The training system comprises a neural network optimizer NN-OPT configured to receive the training output 708 and the delayed training target 704. The neural network optimizer NN-OPT comprises a first loss function. The first loss function determines a loss based on the L-norm error between the training output 708 and the delayed training target 704. For example, the first loss function may be the mean-square error loss which is based on the L2-norm error: ${loss 1}_{L} \left(y\left(Θ\right),t\right) = \frac{1}{M} {\sum }_{m = 1}^{M} {\left‖{y}_{m}\left(Θ\right)-{t}_{m}\right‖}_{2} ,$ where $y \left(Θ\right) ∈ {ℝ}^{N \times M}$ denotes a batch of training outputs 708 containing *M* number of training outputs 708 with dimension *N* where *N* corresponds to the length of time segmentation of the training output 708, Θ are the neural network parameters, and $t ∈ {ℝ}^{N \times M}$ denotes a batch of (delayed) training targets 704 containing M number of (delayed) training targets 704 with dimension *N.* The subscript of ${y}_{m} \left(Θ\right) ∈ {ℝ}^{N}$ and ${t}_{m} ∈ {ℝ}^{N}$ denotes the *n*'th training output 708 and training target 704, respectively. The neural network optimizer NN-OPT is configured to use the backpropagation algorithm to determine the gradient of the first loss function with respect to the neural network parameters. The neural network optimizer NN-OPT is configured to update the neural network parameters based on determined gradients and an iterative solver such as stochastic gradient descent and provide the updated neural network parameters 710. The training system is configured to continuously provide new training inputs 701 and training targets 702 for updating the neural network parameters until a stopping criterion is met. A stopping criterion may for example be based on a maximum number of iterations or if the loss of the first loss function is below a pre-defined threshold or a combination of several stopping criteria.

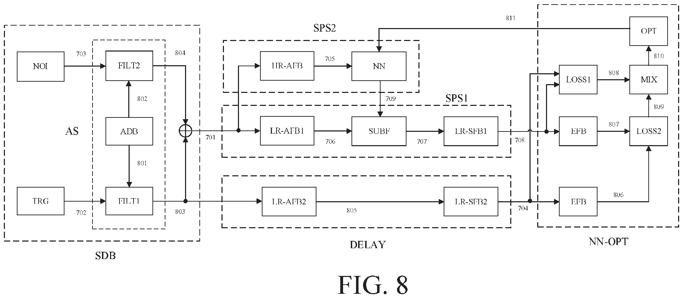

FIG. 8 schematically shows a second system for training a neural network NN according to the present disclosure. The training system comprises a sound database SDB comprising a first database TRG of speech components, and a second database NOI comprising a plurality of noise components. The first database TRG is configured to provide a speech component 702. The second database NOI is configured to provide a noise component 703. The sound database SDB comprises an acoustic simulator AS comprising an acoustic database ADB. The acoustic database ADB comprises a plurality of acoustic impulse responses including head-related impulse responses and room impulse responses. The acoustic simulator AS comprises a first filter FILT1 and a second filter FILT2. The first filter FILT1 is configured to filter the speech component 702 with a first acoustic impulse response 801 and provide a filtered speech component 803. The second filter FILT2 is configured to filter the noise component 703 with a second acoustic impulse response 802 and provide a filtered noise component 804. The sound database SDB is configured to linearly combine the filtered speech component 803 and the filtered noise component 804. The sound database SDB is configured to provide a training input 701 being the linearly combined filtered speech 803 and noise component 804. The sound database SDB is configured to provide a training target 803 being the filtered speech component 803.

The training system comprises a first signal processing system SPS1 and a second signal processing system SPS2. The first signal processing system SPS1 of FIG. 8 is based on the first signal processing system in FIG. 7, and the second signal processing system SPS2 of FIG. 8 is based on the second signal processing system SPS2 in FIG. 7.

The training system comprises a delay unit DELAY comprising a second low-resolution analysis filter bank LR-AFB2 and a second low-resolution synthesis filter bank LR-SFB2 which are based on the first low-resolution analysis filter bank LR-AFB1 and the first low-resolution synthesis filter bank LR-SFB1 of the first signal processing system SPS1, respectively. The filter banks (LR-AFB2, LR-SFB2) of the delay unit DELAY are configured to delay the training target 803 to match the system delay of the first signal processing system SPS1 and provide a delayed training target 704.

The training system comprises a neural network optimizer NN-OPT. The neural network optimizer NN-OPT comprises an evaluation filter bank EFB configured to transform the training output 708 and the training target 704 to the time-frequency domain and thereby provide a training output spectrum 807 and a training target spectrum 806. The evaluation filter bank EFB is based on the short-time Fourier transform, but any type of analysis filter bank may be used. The neural network optimizer NN-OPT comprises a first loss function LOSS1 and a second loss function LOSS2. The first loss function LOSS1 is based on determining a first loss 808 between the training output 708 and the training target 704. For example, the first loss function LOSS1 may be the mean-square error loss which is based on the L2-norm error, i.e.: ${loss 1}_{L} \left(y\left(Θ\right),t\right) = \frac{1}{M} {\sum }_{m = 1}^{M} {\left‖{y}_{m}\left(Θ\right)-{t}_{m}\right‖}_{2} ,$ where $y \left(Θ\right) ∈ {ℝ}^{N \times M}$ and $t ∈ {ℝ}^{N \times M}$*.* The second loss function LOSS2 is based on determining a second loss 809 between the training output spectrum 807 and the training target spectrum 806. For example, the second loss function LOSS2 may be the mean-square error loss which is based on the L2-norm error, i.e.: ${loss 2}_{L} \left(Y\left(Θ\right),T\right) = \frac{1}{MK} {\sum }_{m = 1}^{M} {\sum }_{k = 1}^{K} {\left‖{Y}_{k , m}\left(Θ\right)-{T}_{k , m}\right‖}_{2} ,$ where $Y \left(Θ\right) ∈ {ℝ}^{L \times K \times M}$ denotes a batch of training output spectrums 807 containing *M* number of training output spectrums 807 with dimension *L* × *K* where *L* corresponds to the number of frames at the output of the evaluation filter bank EFB of the training output spectrums 806 and *K* corresponds to the number of frequency bands, Θ are the neural network parameters, and $T ∈ {ℝ}^{L \times K \times M}$ denotes a batch of training target spectrums 806 containing *M* number of training target spectrums 803 with dimension *L* × *K* where *L* corresponds to the number of frames at the output of the evaluation filter bank EFB of the training target spectrums 806 and *K* corresponds to the number of frequency bands.

The neural network optimizer NN-OPT comprises a loss mixer MIX configured to linearly combine the first loss 808 and the second loss 809 using a loss weight *λ*. The linearly combined loss 810 is referred as the neural network loss or the third loss 810 and is given as ${loss 3}_{L} = \left(y\left(Θ\right),t\right) = {loss 1}_{L} \left(y\left(Θ\right),t\right) + λ ⋅ loss {2}_{L} \left(Y\left(Θ\right),T\right) ,$ where the loss weight may be chosen to be a positive value. The loss mixer MIX is configured to provide the linearly combined loss 810. The neural network optimizer NN-OPT comprises an optimizer OPT configured to receive the linearly combined loss 810. The optimizer OPT is configured to use the backpropagation algorithm to determine the gradient of the linearly combined loss 810 with respects to the neural network parameters. The neural network optimizer NN-OPT is configured to update the neural network parameters of the neural network based on determined gradients and an iterative solver such as stochastic gradient descent and provide the updated neural network parameters 811.

The training system is configured to continuously provide new training inputs 801 and training targets 803 for updating the neural network parameters until a stopping criterion is met. A stopping criterion may for example be based on a maximum number of iterations or if the loss of the linearly combined loss 810 is below a pre-defined threshold or a combination of several stopping criteria.

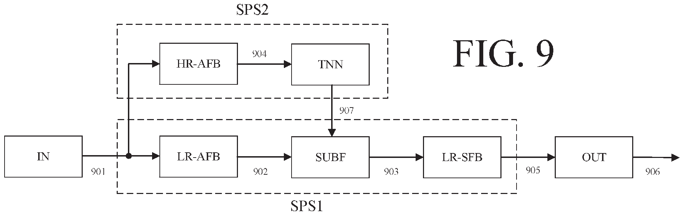

FIG. 9 schematically shows a first embodiment of a hearing aid comprising a trained neural network TNN according to the present disclosure. FIG. 9 shows an exemplary block diagram of a hearing aid comprising an input unit IN configured to pick-up sound and provide an electrical audio input signal 901 representing the picked-up sound. The hearing aid comprises a first signal processing system SPS1 comprising a low-resolution analysis filter bank LR-AFB configured to provide *M_{LR}* numbers of first sub-band input signals 902 based on the electrical audio input signal 901.

The first signal processing system SPS1 comprises one or more sub-band filters SUBF. The first signal processing system SPS1 is configured to provide a plurality of processed sub-band signals 903 based on filtering the first sub-band input signals 902 using the one or more sub-band filters SUBF. The hearing aid comprises a second signal processing system SPS2 comprising a high-resolution analysis filter bank HR-AFB.

The number of second sub-band input signals *M_{HR}* is larger than the number of second sub-band input signals *M_{LR}* for example by a factor of 2 or 4. The second signal processing system SPS2 comprises a trained neural network TNN. The trained neural network is configured to determine a plurality of sub-band filter coefficients 907 of the one or more sub-band filters SUBF based on the second sub-band input signals 904 to reduce noise in the first sub-band input signals 902.

The first signal processing system SPS1 comprising a low-resolution synthesis filter bank LR-SFB being configured to provide a processed output signal 905 based on the processed sub-band signals 904. An output unit OUT comprising a loudspeaker configured to provide an audible processed sound 906 based on the processed output signal 905.

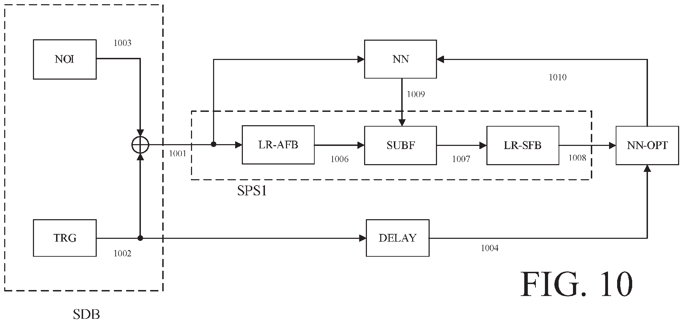

FIG. 10 schematically shows a third system for training a neural network according to the present disclosure. The training system comprises a sound database SDB comprising a first database TRG of speech components, and a second database NOI comprising a plurality of noise components. The first database TRG is configured to provide a speech component 1002. The second database NOI is configured to provide a noise component 1003. The sound database SDB is configured to linearly combine the speech component 1002 and the noise component 1003. The sound database SDB is configured to provide a training input 1001 being the linearly combined speech and noise component. The sound database SDB is configured to provide a training target 1002 being the speech component.

The training system comprises a first signal processing system SPS1 and a second signal processing system SPS2. The first signal processing system SPS1 comprises a low-resolution analysis filter bank LR-AFB configured to provide a plurality of low-resolution training sub-band input signals 1006 based on the training input 1001. The first signal processing system SPS1 comprises one or more sub-band filters SUBF. The second signal processing system SPS2 comprises a neural network NN configured to determine the sub-band filters SUBF based on the training input 1001 and a plurality of neural network parameters. The neural network NN is configured to determine the sub-band filters SUBF using initialized neural network parameters at the beginning of the training of the neural network NN and use updated neural network parameters 1010 when the neural network parameters are updated. The sub-band filters SUBF are configured to provide a plurality of processed training sub-band input signals 1007 based on filtering the low-resolution training sub-band input signals 1006 using the determined sub-band filters SUBF. The first signal processing system SPS1 comprises a low-resolution synthesis filter bank LR-SFB configured to provide a training output 1008 based on the processed training sub-band signals 1007. The training system comprises a delay unit DELAY configured to provide a delayed training target 1004 by delaying the training target 1002 with a pre-defined amount of delay.

The training system comprises a neural network optimizer NN-OPT configured to receive the training output 1008 and the delayed training target 1004. The neural network optimizer NN-OPT comprises a first loss function. The first loss function determines a loss based on the L-norm error between the training output 1008 and the delayed training target 1004. The neural network optimizer NN-OPT is configured to update the neural network parameters based on determining gradients and using an iterative solver such as stochastic gradient descent and provide the updated neural network parameters 1010.

The training system is configured to continuously provide new training inputs 1001 and training targets 1002 for updating the neural network parameters until a stopping criterion is met.

It is intended that the structural features of the devices described above, either in the detailed description and/or in the claims, may be combined with steps of the method, when appropriately substituted by a corresponding process.

As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element, but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method are not limited to the exact order stated herein, unless expressly stated otherwise.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art.

The claims are not intended to be limited to the aspects shown herein but are to be accorded the full scope consistent with the language of the claims, wherein reference to an element in the singular is not intended to mean "one and only one" unless specifically so stated, but rather "one or more." Unless specifically stated otherwise, the term "some" refers to one or more.

## Claims

1. A method for training a neural network (NN) comprising:
receiving, by a sound database (SDB), a training input (601), and wherein the training input (601) comprises a speech component (602) and a noise component (603);
receiving, by the sound database (SDB), a training target (604) comprising the speech component;
providing, by a high-resolution analysis filter bank (HR-AFB), a high-resolution training sub-band input (605) based on the training input (601),
determining, by the neural network (NN) comprising a plurality of neural network parameters, one or more sub-band filters (SUBF, 609) based on the high-resolution training sub-band input (605);
providing, by a low-resolution analysis filter bank (LR-AFB), a low-resolution training sub-band input (606) based on the training input (601);
providing, by filtering the low-resolution training sub-band input (606) using the one or more sub-band filters (SUBF), a training sub-band output (607);
providing, by a low-resolution synthesis filter bank (LR-SFB), a training output (608); and
training the neural network (NN) by updating, by a network optimizer (NN-OPT), the plurality of neural network parameters based on reducing a neural network loss between the training output (608) and the training target (604).

2. A method for training a neural network (NN) according to claim 1 comprising delaying, by a delay unit (DELAY), the training target (604) with a pre-defined amount of delay.

3. A method for training a neural network (NN) according to claim 2 comprising delaying, by a delay unit (DELAY), the training target (604) equivalent to the system delay of the low-resolution analysis filter bank (LR-AFB) and the low-resolution synthesis filter bank (LR-SFB).

4. A method for training a neural network (NN) according to any one of claims 1-3 comprising determining, by a first loss function (LOSS1), the neural network loss as the L-norm error between the training output (608) and the training target (604).

5. A method for training a neural network (NN) according to any one of claims 1-3 comprising:
providing, by an evaluation filter bank (EFB), a training output spectrum (707) indicative of the frequency spectrum of the training output (608);
providing, by the evaluation filter bank (EFB), a training target spectrum (706) indicative of the frequency spectrum of the training target (604);
determining, by a second loss function (LOSS2), the neural network loss as the L-norm error between the training output spectrum (707) and the training target spectrum (706).

6. A method for training a neural network (NN) according to claim 4 and claim 5 comprising:
providing, by the first loss function (LOSS1), a first loss as the L-norm error between the training output (608) and the training target (604);
providing, by the second loss function (LOSS2), a second loss as the L-norm error between the training output spectrum (707) and the training target spectrum (706);
determining the neural network loss as a combination (710) of the first loss (708) and second loss (709).

7. A method for training a neural network (NN) according to any one of claims 1-6 comprising providing, by an acoustic simulator (AS), the speech component (704) by filtering the speech component (603) with an acoustic impulse response (702) provided by an acoustic database (ADB).

8. A method for training a neural network (NN) according to any one of claims 1-7 comprising providing, by an acoustic simulator (AS), the noise component (703) by filtering the noise component (602) with an acoustic impulse response (701) provided by an acoustic database (ADB).

9. A method for training a neural network (NN) according to claim 7 or 8, wherein the acoustic impulse response is a head-related impulse response.

10. A method for training a neural network (NN) according to claim 7 or 8, wherein the acoustic impulse response is a room impulse response.

11. A hearing aid comprising a neural network (NN) trained according to any one of claims 1-10.

12. A hearing aid system comprising a hearing aid and an auxiliary device, and wherein the auxiliary device comprises a neural network (NN) trained according to any one of claims 1-10, and wherein the auxiliary device is configured to determine the at least one sub-band filter coefficient of one or more sub-band filters (SUBF) of the hearing aid based on the neural network (NN), and transmit the at least one sub-band filter coefficient to the hearing aid through a communication link between the hearing aid and the auxiliary device.
